(19) Europäisches Patentamt

European Patent Office

Office européen des brevets

(11) **EP 4 462 506 A1**

(12) # EUROPEAN PATENT APPLICATION
published in accordance with Art. 153(4) EPC

(43) Date of publication:
**13.11.2024 Bulletin 2024/46**

(21) Application number: **23880284.7**

(22) Date of filing: **20.10.2023**

(51) International Patent Classification (IPC):
$H01M\ 4/38$ (2006.01)  $H01M\ 4/48$ (2010.01)
$H01M\ 4/62$ (2006.01)  $H01M\ 4/134$ (2010.01)
$H01M\ 4/1395$ (2010.01)  $H01M\ 4/04$ (2006.01)
$H01M\ 10/0525$ (2010.01)  $H01M\ 4/02$ (2006.01)

(52) Cooperative Patent Classification (CPC):
H01M 4/02; H01M 4/04; H01M 4/134;
H01M 4/1395; H01M 4/38; H01M 4/48; H01M 4/62;
H01M 10/0525

(86) International application number:
**PCT/KR2023/016334**

(87) International publication number:
**WO 2024/085709 (25.04.2024 Gazette 2024/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.10.2022 KR 20220136718
19.10.2023 KR 20230140418**

(71) Applicant: **LG Energy Solution, Ltd.
Seoul 07335 (KR)**

(72) Inventors:
• **PARK, Su Jin**
  **Daejeon 34122 (KR)**
• **JUN, Chan Soo**
  **Daejeon 34122 (KR)**
• **KO, Minjin**
  **Daejeon 34122 (KR)**
• **LEE, Jaewook**
  **Daejeon 34122 (KR)**

(74) Representative: **Hoffmann Eitle
Patent- und Rechtsanwälte PartmbB
Arabellastraße 30
81925 München (DE)**

(54) **ANODE FOR LITHIUM SECONDARY BATTERY, METHOD FOR MANUFACTURING ANODE FOR LITHIUM SECONDARY BATTERY, AND LITHIUM SECONDARY BATTERY COMPRISING ANODE**

(57)    The present disclosure relates to a negative electrode for a lithium secondary battery, a method for manufacturing the negative electrode, and a lithium secondary battery including the negative electrode.

[Figure 1]

**Description**

[Technical Field]

The present application claims priority to and the benefit of Korean Patent Application No. 10-2022-0136718 filed in the Korean Intellectual Property Office on October 21, 2022, the entire disclosures of which are incorporated herein by reference in their entirety for all purposes as if fully set forth herein.

The present disclosure relates to a negative electrode for a lithium secondary battery, a method for manufacturing the negative electrode, and a lithium secondary battery including the negative electrode.

[Background Art]

Due to the rapid increase in the use of fossil fuels, the demand for the use of alternative energy or clean energy is increasing, and as part thereof, the fields that are being studied most actively are the fields of power generation and power storage using an electrochemical reaction.

At present, a secondary battery is a representative example of an electrochemical device that utilizes such electrochemical energy, and the range of use thereof is gradually expanding.

Along with the technological development and the increase in demand for mobile devices, the demand for secondary batteries as an energy source is sharply increasing. Among such secondary batteries, lithium secondary batteries having high energy density and voltage, long cycle life, and low self-discharging rate have been commercialized and widely used. In addition, research is being actively conducted on methods for manufacturing a high-density electrode having a higher energy density per unit volume as an electrode for such a high-capacity lithium secondary battery.

In general, a secondary battery includes a positive electrode, a negative electrode, an electrolyte, and a separator. The negative electrode includes a negative electrode active material for intercalating and deintercalating lithium ions to and from the positive electrode, and silicon-based particles having a high discharge capacity may be used as the negative electrode active material.

In particular, in response to the demand for high-density energy batteries in recent years, research has been being actively conducted into methods for increasing a capacity by using a silicon-based compound such as Si/C or SiOx having a capacity 10-fold or higher than that of a graphite-based material, in combination as a negative electrode active material. When compared with graphite that is typically used, however, the silicon-based compound that is a high-capacity material is excellent in capacity characteristic itself, but can undergo rapid volume expansion during a charging process to disconnect a conductive path, resulting in deterioration in battery characteristics, and accordingly, the capacity decreases from the initial stage. In addition, for a silicon-based negative electrode, when the charging and discharging cycle is repeated, lithium ions may not be uniformly charged in the depth direction of the negative electrode and reactions proceed on the surface, so that surface degradation may be accelerated, and therefore, the performance needs to be improved in terms of battery cycle.

Therefore, in order to address the problems that may occur when a silicon-based compound is used as a negative electrode active material, a variety of methods have been discussed, such as a method of controlling a drive potential, a method of additionally coating a thin film on an active material layer, a method of suppressing volume expansion itself such as a method of controlling a particle diameter of a silicon-based compound or a development of a binder capable of suppressing volume expansion of a silicon-based compound to prevent disconnection of a conductive path. In addition, research is being conducted to supplement the life characteristics of the silicon-based negative electrode by limiting a proportion of the silicon-based active material used during initial charging and discharging by a method of pre-lithiating the silicon-based active material layer, and imparting a reservoir role.

However, since the above methods may make the performance of the battery somewhat deteriorate, there is a limitation in the application thereof, so there is still a limitation in commercialization of manufacturing a negative electrode battery having a high content of a silicon-based compound. As the proportion of the silicon-based active material included in the silicon-based active material layer increases, a reaction can proceed on the surface of the negative electrode, which can cause problems.

Therefore, research is needed on methods to prevent degradation in the electrode surface during charging and discharging cycles even when a silicon-based compound is used as an active material, and to prevent large volume expansion and resultant life deterioration.

Prior Art Document

(Patent Literature 1) Japanese Patent Application Publication No. 2009-080971

[Detailed Description of the Invention]

[Technical Problem]

The present disclosure relates to a method that can prevent degradation in an electrode surface during charging and discharging cycles, which is a problem described in the related art, while using a silicon-based active material in a negative electrode, and furthermore, while improving the problem of the volume expansion of the silicon-based active material.

Specifically, the present disclosure prevents degradation in electrode surface by configuring the negative electrode active material layer into two layers instead of a single layer, and furthermore, improves life characteristics by improving the binder included in the lower layer (which is the first negative electrode active material layer). These advantages were confirmed through research. Accordingly, aspects of the present disclosure relate to a negative electrode for a lithium secondary battery, a method for manufacturing the negative electrode, and a lithium secondary battery including the negative electrode.

[Technical Solution]

An exemplary embodiment of the present disclosure provides a negative electrode for a lithium secondary battery, the negative electrode including: a negative electrode current collector layer; a first negative electrode active material layer provided on one surface or both surfaces of the negative electrode current collector layer; and a second negative electrode active material layer provided on a surface of the first negative electrode active material layer opposite to a surface of the first negative electrode active material layer facing the negative electrode current collector layer, wherein the first negative electrode active material layer includes a first negative electrode active material layer composition including a first negative electrode active material, and the second negative electrode active material layer includes a second negative electrode active material layer composition including a second negative electrode active material, wherein the first negative electrode active material includes one or more selected from the group consisting of SiOx (x=0) and SiOx (0<x<2), and includes SiOx (x=0) in an amount of 95 parts by weight or more based on 100 parts by weight of the first negative electrode active material, wherein the second negative electrode active material includes a mixture of one or more selected from the group consisting of a carbon-based active material, a silicon-based active material, a metal-based active material capable of forming an alloy with lithium, and a lithium-containing nitride, wherein the first negative electrode active material layer composition includes a first negative electrode binder, and wherein the first negative electrode binder includes a polyacrylamide (PAM) or polyacrylic acid (PAA)-based polymer aqueous binder and a rubber-based binder, and satisfies Equation 1 below:

$$[\text{Equation } 1]$$

$$1 \leq X/Y < 4$$

in Equation 1,
X is parts by weight of the rubber-based binder based on 100 parts by weight of the first negative electrode binder, and
Y is parts by weight of the aqueous binder based on 100 parts by weight of the first negative electrode binder.

In addition, in an exemplary embodiment of the present disclosure, the first negative electrode active material layer may be formed on a portion or on the entire surface of the negative electrode current collector layer, and the second negative electrode active material layer may be formed on portion or on the entire surface of the first negative electrode active material layer.

Another exemplary embodiment provides a method for manufacturing a negative electrode for a lithium secondary battery, the method including: preparing a negative electrode current collector layer; forming a first negative electrode active material layer by applying a first negative electrode active material layer composition including a first negative electrode active material to one surface or both surfaces of the negative electrode current collector layer; and forming a second negative electrode active material layer by applying a second negative electrode active material layer composition including a second negative electrode active material to a surface of the first negative electrode active material layer opposite to a surface of the first negative electrode active material layer facing the negative electrode current collector layer, wherein the first negative electrode active material includes one or more selected from the group consisting of SiOx (x=0) and SiOx (0<x<2), and includes SiOx (x=0) in an amount of 95 parts by weight or more based on 100 parts by weight of the first negative electrode active material, wherein the second negative electrode active material includes a mixture of one or more selected from the group consisting of a carbon-based active material, a silicon-based active material, a metal-based active material capable of forming an alloy with lithium, and a lithium-containing nitride, wherein the first negative electrode active material layer composition includes a first negative electrode binder, and wherein the first negative electrode binder includes a polyacrylamide (PAM) or polyacrylic acid (PAA)-based polymer aqueous binder and a rubber-based binder, and satisfies the Equation 1 above.

Finally, there is provided a lithium secondary battery including a positive electrode; a negative electrode for a lithium secondary battery according to aspects of the present disclosure; a separator provided between the positive electrode and the negative electrode; and an electrolyte.

[Advantageous Effects]

The negative electrode for a lithium secondary battery according to an exemplary embodiment of the present disclosure has a double-layer active material layer composed of the first negative electrode active material layer and the second negative electrode active material layer. In particular, the first negative electrode active material included in the first negative electrode active material layer can includes one or more selected from the group consisting of SiOx (x=0) and SiOx (0<x<2), and includes SiOx (x=0) in an amount of 95 parts by weight or more based on 100 parts by weight of the first negative electrode active material, and the second negative electrode active material included in the second negative electrode active material layer includes one or more selected from the group consisting of a carbon-based active material, a silicon-based active material, a metal-based active material capable of forming an alloy with lithium, and a lithium-containing nitride.

In particular, the second negative electrode active material may include one or more selected from the group consisting of a carbon-based active material, SiOx (0<x<2), SiC, and a Si alloy, and in particular, may include SiOx (0<x<2).

The negative electrode for a lithium secondary battery according to aspects of the present disclosure includes a double-layer active material layer having a specific composition and content as described above. In particular, the first negative electrode active material layer includes a high content of SiOx (x=0), so that the advantages of high capacity, high density, and rapid charging can be retained as they are. Furthermore, by including silicon-based, carbon-based active materials, and the like in the second negative electrode active material layer, degradation in the electrode surface can be prevented during charging and discharging cycles, and uniformity can also be improved during pre-lithiation.

In addition, the first negative electrode binder includes the polyacrylamide (PAM) or polyacrylic acid (PAA)-based polymer aqueous binder and the rubber-based binder, and particularly, satisfies the above Equation 1. That is, a proportion of the aqueous binder for improving the dispersibility of the first negative electrode active material layer composition can be reduced, and the rubber-based binder can be further included, whereby it is possible to solve the problem of process stability in which shrinkage due to heat intensifies, thereby enhancing the life characteristics. In addition, when the first negative electrode binder having the specific composition as described above is used, the problem of the volume expansion is improved, the amount of conductive material can be reduced, and the electrode can be made thinner, leading to maximization in capacity characteristics and improvement in non-uniformity in the depth direction.

As such, the negative electrode for a lithium secondary battery according to aspects of the present disclosure has the features that the first negative electrode active material layer and the second negative electrode active material layer are included as a double-layer structure to which specific compositions and contents are applied in order to address a problem of surface degradation, a problem of uniformity during pre-lithiation and a problem of life characteristics, which problems are disadvantages when a high content of Si particles is applied to an electrode, while taking advantage of an electrode to which the high content of Si particles is provided as a single-layer active material.

[Brief Description of Drawings]

FIG. 1 is a view showing a stack structure of a negative electrode for a lithium secondary battery according to an exemplary embodiment of the present disclosure.
FIG. 2 is a view showing a stack structure of a negative electrode for a lithium secondary battery according to an exemplary embodiment of the present disclosure.
FIG. 3 is a flowchart showing a wet on dry process according to an exemplary embodiment of the present disclosure.
FIG. 4 is a flowchart showing a wet on wet process according to an exemplary embodiment of the present disclosure.
FIG. 5 is a view showing a method for measuring occurrence of curl in an Experimental Example of the present disclosure.

<Explanation of Reference Numerals and Symbols>

10: second negative electrode active material layer

20: first negative electrode active material layer

30: negative electrode current collector layer

40: negative electrode active material layer including first negative electrode active material layer and second negative electrode active material layer

[Best Mode]

Before describing embodiments and aspects of the present disclosure, some terms are first defined.

When one part "includes", "comprises" or "has" one constituent element in the present specification, unless otherwise specifically described, this does not mean that another constituent element is excluded, but means that another constituent element may be further included.

In the present specification, 'p to q' means a range of 'p or more and q or less'.

In this specification, the "specific surface area" is measured by the Brunauer-Emmett-Teller (BET) method, and specifically, is calculated from a nitrogen gas adsorption amount at a liquid nitrogen temperature (77K) by using BELSORP-mini II available from BEL Japan, Inc. That is, in the present disclosure, the BET specific surface area may refer to the specific surface area measured by the above measurement method.

In the present specification, "Dn" refers to a particle diameter distribution, and refers to a particle diameter at the n% point in the cumulative distribution of the number of particles according to the particle diameter. That is, D50 is a particle diameter (average particle diameter) at the 50% point in the cumulative distribution of the number of particles according to the particle diameter, D90 is a particle diameter at the 90% point in the cumulative distribution of the number of particles according to the particle diameter, and D10 is a particle diameter at the 10% point in the cumulative distribution of the number of particles according to the particle diameter. Meanwhile, the particle diameter distribution may be measured using a laser diffraction method. Specifically, after powder to be measured is dispersed in a dispersion medium, the resultant dispersion is introduced into a commercially available laser diffraction particle size measurement apparatus (for example, Microtrac S3500) in which a difference in a diffraction pattern according to the particle size is measured, when a laser beam passes through particles, and then a particle size distribution is calculated.

In the present specification, the description "a polymer includes a certain monomer as a monomer unit" means that the monomer participates in a polymerization reaction and is included as a repeating unit in the polymer. In the present specification, when a polymer includes a monomer, this is interpreted as the same as that the polymer includes a monomer as a monomer unit.

In the present specification, it is understood that the term 'polymer' is used in a broad sense including a copolymer unless otherwise specified as 'a homopolymer'.

In the present specification, a weight-average molecular weight (Mw) and a number-average molecular weight (Mn) are polystyrene converted molecular weights measured by gel permeation chromatography (GPC) while employing, as a standard material, a monodispersed polystyrene polymer (standard sample) having various degrees of polymerization commercially available for measuring a molecular weight. In the present specification, a molecular weight refers to a weight-average molecular weight unless particularly described otherwise.

Hereinafter, embodiments of the present disclosure will be described in detail with reference to the drawings so that one skilled in the art can readily implement the present disclosure. However, the present disclosure may be embodied in various different forms, and is not limited to the following descriptions.

An exemplary embodiment of the present disclosure provides a negative electrode for a lithium secondary battery, the negative electrode including: a negative electrode current collector layer; a first negative electrode active material layer provided on one surface or both surfaces of the negative electrode current collector layer; and a second negative electrode active material layer provided on a surface of the first negative electrode active material layer opposite to a surface of the first negative electrode active material layer facing the negative electrode current collector layer, wherein the first negative electrode active material layer includes a first negative electrode active material layer composition including a first negative electrode active material, and the second negative electrode active material layer includes a second negative electrode active material layer composition including a second negative electrode active material, wherein the first negative electrode active material includes one or more selected from the group consisting of SiOx (x=0) and SiOx (0<x<2), and includes SiOx (x=0) in an amount of 95 parts by weight or more based on 100 parts by weight of the first negative electrode active material, wherein the second negative electrode active material includes a mixture of one or more selected from the group consisting of a carbon-based active material, a silicon-based active material, a metal-based active material capable of forming an alloy with lithium, and a lithium-containing nitride, wherein the first negative electrode active material layer composition includes a first negative electrode binder, and wherein the first negative electrode binder includes a polyacrylamide (PAM) or polyacrylic acid (PAA)-based polymer aqueous binder and a rubber-based binder, and satisfies Equation 1 below:

[Equation 1]

$$1 \leq X/Y < 4$$

in Equation 1,
X is parts by weight of the rubber-based binder based on 100 parts by weight of the first negative electrode binder, and Y is parts by weight of the aqueous binder based on 100 parts by weight of the first negative electrode binder.

The negative electrode for a lithium secondary battery according to aspects of the present disclosure has features including that the first negative electrode binder includes the polyacrylamide (PAM) or polyacrylic acid (PAA)-based polymer aqueous binder and the rubber-based binder and satisfies the Equation 1 above in order to address a problem of surface degradation, a problem of uniformity during pre-lithiation and a problem of life characteristics, which problems are disadvantages when a high content of Si particles is provided to an electrode, while taking advantage of an electrode to which the high content of Si particles is provided as a single-layer active material. That is, a proportion of the aqueous binder for improving the dispersibility of the first negative electrode active material layer composition can be reduced, and the rubber-based binder can be further included, whereby it may be possible to solve the problem of process stability in which shrinkage due to heat intensifies, thereby enhancing the life characteristics. In addition, when the first negative electrode binder having the specific composition as described above is used, the problem of the volume expansion can be improved, the amount of conductive material can be reduced, and the electrode can be made thinner, leading to maximization in capacity characteristics and improvement in non-uniformity in the depth direction.

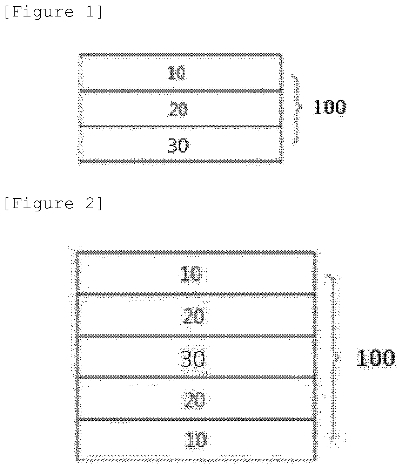

FIG. 1 is a view showing a stack structure of a negative electrode for a lithium secondary battery according to an exemplary embodiment of the present disclosure. Specifically, a negative electrode 100 for a lithium secondary battery can be seen which includes a first negative electrode active material layer 20 and a second negative electrode active material layer 10 on one surface of a negative electrode current collector layer 30. FIG. 1 shows that the first negative electrode active material layer is formed on one surface, but the first negative electrode active material layer may be formed on both surfaces of the negative electrode current collector layer. As described above, in an exemplary embodiment of the present disclosure, the first negative electrode active material layer may be formed on an entire surface of the negative electrode current collector layer, and the second negative electrode active material layer may be formed on an entire surface of the first negative electrode active material layer.

In addition, FIG. 2 is a view showing a stack structure of a negative electrode for a lithium secondary battery according to an exemplary embodiment of the present disclosure. Specifically, as shown in FIG. 2, a first negative electrode active material layer 20 and a second negative electrode active material layer 10 may be formed on both surfaces of a negative electrode current collector layer 30. In addition, an arrangement of 10>20>30>20>10 is possible, and furthermore, when the first negative electrode active material layer and the second negative electrode active material layer are sequentially stacked on only one surface of the negative electrode current collector layer, such as 10>20>30>20, 10>20>30>10, 10>20>30>10>20, or the like, the negative electrode active material layers may be stacked in an arbitrary arrangement on the opposite surface. Preferably, both surfaces of the negative electrode current collector layer have the same composition, and specifically may have a structure of 10>20>30>20>10.

Below, aspects of the negative electrode for a lithium secondary battery according to embodiments of the present disclosure will be described in more detail.

In an exemplary embodiment of the present disclosure, there is provided a negative electrode for a lithium secondary battery including: a negative electrode current collector layer; a first negative electrode active material layer provided on one surface or both surfaces of the negative electrode current collector layer; and a second negative electrode active material layer provided on a surface of the first negative electrode active material layer opposite to a surface of the first negative electrode active material layer in contact with the negative electrode current collector layer.

In an exemplary embodiment of the present disclosure, the negative electrode current collector layer generally has a thickness of 1 um to 100 um. Such a negative electrode current collector layer is not particularly limited as long as it has high conductivity without causing a chemical change in the battery. For example, copper, stainless steel, aluminum, nickel, titanium, fired carbon, copper or stainless steel each surface-treated with carbon, nickel, titanium, silver, or the like, an aluminum-cadmium alloy, or the like may be used. In addition, the negative electrode current collector layer may have microscopic irregularities formed on a surface to enhance a bonding force of the negative electrode active material, and may be used in various forms such as a film, a sheet, a foil, a net, a porous body, a foamed body, or a non-woven fabric body.

In an exemplary embodiment of the present disclosure, a thickness of the negative electrode current collector layer may be 1 um or greater and 100 um or less.

However, the thickness may be variously modified depending on a type and use of the negative electrode used, and is not limited thereto.

In an exemplary embodiment of the present disclosure, the first negative electrode active material may include one or more selected from the group consisting of SiOx (x=0) and SiOx (0<x<2), and may include the SiOx (x=0) in an amount of 95 parts by weight or more on the basis of 100 parts by weight of the first negative electrode active material.

In an exemplary embodiment of the present disclosure, the first negative electrode active material may include one or more selected from the group consisting of SiOx (x=0) and SiOx (0<x<2), and may include SiOx (x=0) in an amount of 95 parts by weight or more, preferably 97 parts by weight or more, and more preferably 99 parts by weight or more, and 100 parts by weight or less, based on 100 parts by weight of the first negative electrode active material.

In an exemplary embodiment of the present disclosure, pure silicon (Si) particles may be particularly used as the first negative electrode active material The use of pure silicon (Si) as the first negative electrode active material may mean that, on the basis of total 100 parts by weight of the first negative electrode active material as described above, pure Si particles (SiOx (x=0)) that are not bound to other particles or elements are included within the above range.

According to certain aspects, the first negative electrode active material used in the first negative electrode active material layer of the present disclosure may be subjected to a very complicated crystal change in a reaction of electrochemically absorbing, storing and releasing lithium atoms. As the reaction of electrochemically absorbing, storing, and releasing lithium atoms proceeds, the composition and crystal structure of silicon particles change to Si (crystal structure: Fd3m), LiSi (crystal structure: I41/a), $Li_2Si$ (crystal structure: C2/m), $Li_7Si_2$ (Pbam), $Li_{22}Si_5$ (F23), and the like. In addition, the volume of silicon particles can expand about 4 times depending on complex changes in crystal structure. Therefore, when the charging and discharging cycle is repeated, silicon particles are destroyed, and as the bond between lithium atom and silicon particle is formed, the insertion site of the lithium atom, which the silicon particle initially had, is damaged, and as a result, the cycle life may remarkably deteriorate.

In an exemplary embodiment of the present disclosure, the first negative electrode active material may be composed of SiOx (x=0).

The first negative electrode active material layer according to aspects of the present disclosure includes the first negative electrode active material, and specifically, includes pure silicon particles including 95 parts by weight or more of SiOx (x=0). In this case, when the high content of pure silicon particles is included, the capacity characteristics are excellent, and in order to solve deterioration in life characteristics due to a non-uniform reaction on a surface resulting from the high content of pure silicon particles, and to improve the rapid charging performance by increasing output characteristics, the second negative electrode active material layer according to the present disclosure is included.

Note that the first negative electrode active material of the present disclosure may have an average particle diameter (D50) of 3 um to 10 um, specifically 4 um to 8 $\mu$m, and more specifically 5 um to 7 um. When the average particle diameter is within the above range, a specific surface area of the particles is within a suitable range, so that a viscosity of a negative electrode slurry is formed within an appropriate range. Accordingly, the particles constituting the negative electrode slurry are smoothly dispersed. In addition, when the size of the first negative electrode active material has a value equal to or greater than the lower limit value of the range, a contact area between the silicon particles and the conductive material is excellent due to the composite made of the conductive material and the binder in the negative electrode slurry, so that a likelihood of sustaining the conductive network increases, thereby increasing the capacity retention rate. In the meantime, when the average particle diameter satisfies the above range, excessively large silicon particles are excluded, so that a surface of the negative electrode is formed smooth. Accordingly, a current density non-uniformity phenomenon during charging and discharging can be prevented.

In an exemplary embodiment of the present disclosure, the first negative electrode active material generally has a characteristic BET surface area. The BET surface area of the first negative electrode active material is preferably 0.01 $m^2$/g to 150.0 $m^2$/g, more preferably 0.1 $m^2$/g to 100.0 $m^2$/g, particularly preferably 0.2 $m^2$/g to 80.0 $m^2$/g, and most preferably 0.2 $m^2$/g to 18.0 $m^2$/g. The BET surface area is measured in accordance with DIN 66131 (using nitrogen).

In an exemplary embodiment of the present disclosure, the first negative electrode active material may be present, for example, in a crystalline or amorphous form, and is preferably not porous. The silicon particles are preferably spherical or splinter-shaped particles. Alternatively, but less preferably, the silicon particles may also have a fiber structure or may be present in the form of a silicon-containing film or coating.

In an exemplary embodiment of the present disclosure, the first negative electrode active material may have a non-spherical shape and its sphericity (circularity) is, for example, 0.9 or less, for example, 0.7 to 0.9, for example 0.8 to 0.9, and for example 0.85 to 0.9.

In the present disclosure, the circularity is determined by Equation 1-1 below, in which A is an area and P is a boundary line.

$$[\text{Equation } 1\text{-}1]$$

$$4\pi A/P^2$$

In an exemplary embodiment of the present disclosure, there is provided a negative electrode for a lithium secondary battery in which the first negative electrode active material is included in an amount of 60 parts by weight or more on the basis of 100 parts by weight of the first negative electrode active material layer composition.

In another exemplary embodiment, based on 100 parts by weight of the first negative electrode active material layer composition, the first negative electrode active material may be included in an amount of 60 parts by weight or more, preferably 65 parts by weight or more, and more preferably 70 parts by weight or more, and 95 parts by weight or less, preferably 90 parts by weight or less, and more preferably 80 parts by weight or less.

Although the first negative electrode active material layer composition according to aspects of the present disclosure uses the first negative electrode active material with a significantly high capacity within the above range, the negative electrode also uses a second negative electrode active material layer described below, which can thereby solve the problems of surface degradation during charging and discharging, uniformity during pre-lithiation, and life characteristics without lowering the overall capacity performance of the negative electrode.

In the related art, it is typical to use only graphite-based compounds as the negative electrode active material. However, in recent years, as the demand for high-capacity batteries is increasing, attempts to mix and use silicon-based compounds are increasing in order to increase capacity. However, the silicon-based compounds have limitations in that the volume rapidly expands during the charging/discharging, resulting in damage to the conductive path formed in the negative electrode active material layer to degrade the performance of the battery.

Accordingly, in an exemplary embodiment of the present disclosure, the first negative electrode active material layer composition may further include one or more selected from the group consisting of a first negative electrode conductive material, and a first negative electrode binder.

In this case, as the first negative electrode conductive material and the first negative electrode binder included in the first negative electrode active material layer composition, those used in the art may be used without limitation.

In an exemplary embodiment of the present disclosure, as the first negative electrode conductive material, materials that can be generally used in the art may be used without limitation, and specifically, one or more selected from the group consisting of a point-like conductive material, a planar conductive material; and a linear conductive material may be included.

The description related to the first negative electrode conductive material is the same as that of the second negative electrode conductive material described below, and therefore, will be given below.

In an exemplary embodiment of the present disclosure, there is provided the negative electrode for a lithium secondary battery in which the first negative electrode binder includes a polyacrylamide (PAM) or polyacrylic acid (PAA)-based polymer aqueous binder and a rubber-based binder, and satisfies the following Equation 1.

[Equation 1]

$$1 \leq X/Y < 4$$

in Equation 1,
X is parts by weight of the rubber-based binder based on 100 parts by weight of the first negative electrode binder, and
Y is parts by weight of the aqueous binder based on 100 parts by weight of the first negative electrode binder.

Generally, a one component aqueous binder has been applied as a binder for silicon-based negative electrodes. That is, an aqueous binder that has a low adhesive force but can improve dispersibility has been applied to disperse a hard silicon-based active material. However, such an aqueous binder also had high rigidity, causing problems such as curling due to stress when drying.

Therefore, when a specific binder that satisfies the above composition and content is applied as the first negative electrode binder according to the present disclosure, the dispersibility can be improved and the adhesive force can be satisfied, thereby enhancing the life characteristics of the negative electrode for a lithium secondary battery.

In an exemplary embodiment of the present disclosure, the first negative electrode binder may include a polymer aqueous binder, and the polymer aqueous binder may have a Young's modulus of $1 \times 10^3$ MPa or higher.

In another exemplary embodiment, the polymer aqueous binder may have a Young's modulus of $1 \times 10^3$ MPa or higher, preferably $2 \times 10^3$ MPa, more preferably $5 \times 10^3$ MPa or higher, and $20 \times 10^3$ MPa or less, preferably $18 \times 10^3$ MPa or less, and more preferably $15 \times 10^3$ MPa or less.

The polymer aqueous binder has both dispersibility for dispersing the negative electrode active material in a negative electrode slurry including the negative electrode composition and adhesive force for binding with the negative electrode current collector layer and the negative electrode active material layer after drying, and may correspond to a binder whose adhesive force is not high. That is, the polymer aqueous binder according to aspects of the present disclosure satisfies the Young's modulus described above, and may mean a binder having a surface bonding form.

In an exemplary embodiment of the present disclosure, the polymer aqueous binder includes at least one selected from the group consisting of polyvinyl alcohol (PVA), polyacrylic acid (PAA), polyethylene glycol (PEG), polyacrylonitrile (PAN), and polyacrylamide (PAM), which can be dissolved in an aqueous solvent such as water. Preferably, in an aspect of having excellent resistance to volume expansion/contraction of the silicon-based active material, the polymer aqueous binder may include at least one selected from the group consisting of polyacrylic acid (PAA) and polyacrylamide (PAM), and more preferably, may include polyacrylic acid (PAA) and polyacrylamide (PAM).

More specifically, the polymer aqueous binder may be a PAM-based binder. In this case, the PAM-based binder is a binder whose main component is PAM, may be used by adjusting proportions of PAM, PAA, and PAN, and can satisfy the Young's modulus described above by appropriately changing the composition.

The polymer aqueous binder may include a polymer aqueous binder in which hydrogen is substituted with Li, Na, Ca or the like, in view of allowing the polymer aqueous binder to be more easily dispersed in an aqueous solvent such as water when preparing a negative electrode slurry for forming a negative electrode active material layer, and coating an active material more smoothly to improve a binding force.

The polymer aqueous binder has hydrophilic properties and is generally insoluble in an electrolyte or an electrolyte solution used in a secondary battery. These characteristics can impart strong stress or tensile strength to the polymer aqueous binder when applied to a negative electrode or a lithium secondary battery, and accordingly, the problem of volume expansion/contraction caused due to charging and discharging of the silicon-based active material can be effectively suppressed.

In an exemplary embodiment of the present disclosure, a weight average molecular weight of the polymer aqueous binder may be 100,000 g/mol or more and 1,000,000 g/mol or less.

In an exemplary embodiment of the present disclosure, the rubber-based binder may have a strain of 15% or more, preferably 20% or more, more preferably 30% or more, and most preferably 40% or more, and 80% or less, preferably 70% or less, and more preferably 60% or less.

In this case, the strain value of the rubber-based binder may be implemented within a range that satisfies the above-mentioned range by specifically adjusting an ST(styrene)/BD(butadiene) ratio of an SBR binder to an appropriate range.

In an exemplary embodiment of the present disclosure, the rubber-based binder is a different material than the polymer aqueous binder, and may be defined as a binder that is not well dissolved in an aqueous solvent such as water but can be smoothly dispersed in the aqueous solvent. Specifically, the rubber-based binder having a strain of 15% or more may include at least one selected from the group consisting of styrene-butadiene rubber (SBR), hydrogenated nitrile butadiene rubber (HNBR), acrylonitrile butadiene rubber, acrylic rubber, butyl rubber, and fluoro rubber, and preferably, may include at least one selected from the group consisting of styrene-butadiene rubber and hydrogenated nitrile butadiene rubber, and more preferably styrene-butadiene rubber, in view of easy dispersion and excellent phase stability.

In general, the rubber-based binder is a material with very high electrolyte wettability compared to the polymer aqueous binder. When the aforementioned rubber-based binder is located near the surface of the silicon-based negative electrode, the negative electrode resistance is lowered because an FEC solvent or $LiPF_6$ salt that can generate an SEI layer can be supplied rapidly.

In an exemplary embodiment of the present disclosure, the Equation 1 above may satisfy $1 \leq X/Y < 4$, preferably $1.1 \leq X/Y < 3.9$, and more preferably $1.2 \leq X/Y < 3.8$.

In an exemplary embodiment of the present disclosure, there is provided a negative electrode for a lithium secondary battery in which X is 50 parts by weight or more and 95 parts by weight or less, and Y is 5 parts by weight or more and 50 parts by weight or less.

In another exemplary embodiment, X may be 50 parts by weight or more and 95 parts by weight or less, preferably 55 parts by weight or more and 90 parts by weight or less, and more preferably 55 parts by weight or more and 80 parts by weight or less, on the basis of 100 parts by weight of the first negative electrode binder.

In another exemplary embodiment, Y may be 5 parts by weight or more and 50 parts by weight or less, preferably 10 parts by weight or more and 45 parts by weight or less, and more preferably 20 parts by weight or more and 45 parts by weight or less, on the basis of 100 parts by weight of the first negative electrode binder.

As described above, the first negative electrode binder according to aspects of the present disclosure is one whose polymer aqueous binder and rubber-based binder satisfy the above contents, and has features capable of improving dispersibility even when using a silicon-based active material and also solving the problem of adhesive force.

That is, when the polymer aqueous binder is used alone, there are risks of bending of the negative electrode, cracking due to bending, and deterioration in life characteristics. In light of this, the rubber-based binder is also included within the range of Equation 1 above. The rubber-based binder can be well dissolved in the electrolyte or electrolyte solution that is generally used for secondary batteries, and can relieve the stress of the polymer aqueous binder to a certain level when used together with the polymer aqueous binder.

Therefore, the first negative electrode binder of the present disclosure includes the aqueous binder and the rubber-based binder satisfying a specific weight ratio (the range of Equation 1), which may be thereby effectively solving the problem of the volume expansion/contraction of the silicon-based active material to improve life characteristics, solving the problem of bending when manufacturing a thin film negative electrode, and improving the adhesive force.

Furthermore, since the volume expansion is improved by including the first negative electrode binder described above, the amount of conductive material can be reduced, and the thickness of the electrode can be thus made thinner, thereby maximizing capacity characteristics and also improving non-uniformity in the depth direction.

In an exemplary embodiment of the present disclosure, the first negative electrode binder may be included in an amount of 30 parts by weight or less, preferably 25 parts by weight or less, and more preferably 20 parts by weight or less, and 5 parts by weight or more, and 10 parts by weight or more, based on 100 parts by weight of the first negative electrode active material layer composition.

In an exemplary embodiment of the present disclosure, the second negative electrode active material may include a mixture of one or more selected from the group consisting of a carbon-based active material, a silicon-based active material, a metal-based active material capable of forming an alloy with lithium, and a lithium-containing nitride.

In this case, there is provided a negative electrode for a lithium secondary battery in which the silicon-based active material is included in an amount of 60 parts by weight or more on the basis of 100 parts by weight of the second negative electrode active material.

In another exemplary embodiment, the silicon-based active material may be included in an amount of 60 parts by weight or more, preferably 70 parts by weight or more, and more preferably 80 parts by weight or more, and 100 parts by weight or less on the basis of 100 parts by weight of the second negative electrode active material, and the second negative electrode active material may be composed of a silicon-based active material.

According to certain aspects, if the parts by weight of the silicon-based active material in the second negative electrode active material layer is less than the above range, the second negative electrode active material layer acts to some extent as a resistance layer during the charging and discharging cycle, so that the capacity retention rate decreases, leading to an increase in a resistance increase rate of the negative electrode.

In an exemplary embodiment of the present disclosure, the silicon-based active material included in the second negative electrode active material may include one or more selected from the group consisting of $SiO_x$ (0<x<2), SiC, and a Si alloy.

In an exemplary embodiment of the present disclosure, there is provided a negative electrode for a lithium secondary battery in which the silicon-based active material includes $SiO_x$ (0<x<2) or SiC.

In another exemplary embodiment, the silicon-based active material included in the second negative electrode active material may include $SiO_x$ (0<x<2).

In another exemplary embodiment, the silicon-based active material included in the second negative electrode active material may include SiC.

In another exemplary embodiment, the second negative electrode active material is a silicon-based active material, and the silicon-based active material is $SiO_x$ (0<x<2).

The negative electrode for a lithium secondary battery according to aspects of the present disclosure has a double-layer configuration in which the second negative electrode active material is included in the second negative electrode active material layer as described above and the first negative electrode active material described above is also included, which can thereby maintaining the characteristics of high capacity and high density, and at the same time, may be capable of solving the problem of surface degradation during charging and discharging, the problem of uniformity during pre-lithiation, and the problem of life characteristics.

In an exemplary embodiment of the present disclosure, representative examples of the carbon-based active material include natural graphite, artificial graphite, expandable graphite, carbon fiber, non-graphitizable carbon, carbon black, carbon nanotubes, fullerene, activated carbon, or the like, and the carbon-based active material can be used without limitation as long as the carbon-based active material is typically used in a carbon material for a lithium secondary battery, and specifically may be processed into a spherical or point-like shape and used.

In an exemplary embodiment of the present disclosure, there is provided a negative electrode for a lithium secondary battery in which the carbon-based active material includes graphite, the graphite includes artificial graphite and natural graphite, a weight ratio of the artificial graphite and natural graphite is 5:5 to 9.5:0.5.

The artificial graphite according to an exemplary embodiment of the present disclosure may be in the form of an initial particle, or may be in the form of a secondary particle in which the plurality of initial particles are aggregated.

As used in the present disclosure, the term "initial particle" means an original particle when a different type of particle is formed from one particle, and a plurality of initial particles may be aggregated, bound or assembled to form a secondary particle.

As used in the present disclosure, the term "secondary particle" means a large physically distinguishable particle formed by aggregating, binding or assembling individual initial particles.

The artificial graphite of the initial particle may be manufactured by heat-treating one or more selected from the group consisting of needle cokes, mosaic cokes and coal tar pitch.

The artificial graphite is generally manufactured by carbonizing raw materials such as coal tar, coal tar pitch and petroleum-based heavy oil to 2,500°C or higher, and after such graphitization, the artificial graphite may be subjected to particle size adjustment such as pulverization and formation of secondary particles and then used as a negative electrode active material. In the case of artificial graphite, the crystals are randomly distributed in the particles, the circularity is lower than that of natural graphite, and the shape is slightly sharp.

Examples of the artificial graphite used in an exemplary embodiment of the present disclosure include mesophase carbon microbeads (MCMB) and mesophase pitch-based carbon fiber (MPCF), which are commercially widely used, artificial graphite graphitized in block form, artificial graphite graphitized in powder form, and the like. The artificial graphite may have a circularity of 0.91 or less, or 0.6 to 0.91, or 0.7 to 0.9.

In addition, the artificial graphite may have a particle diameter of 5 to 30 um, and preferably 10 to 25 um.

Specifically, the artificial graphite initial particle may have a D50 of 6 um to 15 um, or 6 um to 10 um, or 6 um to 9 um. When the D50 of the initial particle satisfies such a range, the initial particle may be formed so as to have high graphitization, the orientation index of the negative electrode active material particle is appropriately secured, so that the rapid charging performance can be improved.

The artificial graphite secondary particle may be formed by assembling initial particles. That is, the secondary particle may be a structure formed by aggregating the initial particles with each other through an assembling process. The secondary particle may include a carbonaceous matrix that aggregates the initial particles. The carbonaceous matrix may include at least one of soft carbon and graphite. The soft carbon may be formed by heat-treating pitch.

The carbonaceous matrix may be included in the secondary particle in an amount of 8% to 16% by weight, specifically 9% to 12% by weight. This range is at a lower level than the content of a carbonaceous matrix used in typical artificial graphite secondary particles. In this range, the particle size of the initial particles in the secondary particle can be controlled, so that structurally stable secondary particles may be manufactured even with a small amount of carbonaceous matrix required for assembly, and the amount of initial particles constituting the secondary particles may also be uniform.

A surface of the artificial graphite secondary particle may include a carbon coating layer, and the carbon coating layer may include at least one of amorphous carbon and crystalline carbon.

The crystalline carbon may further improve conductivity of the negative electrode active material. The crystalline carbon may include at least one selected from the group consisting of fluorene and graphene.

The amorphous carbon may appropriately maintain the strength of the coating layer to suppress expansion of the natural graphite. The amorphous carbon may be a carbon-based material formed using at least one carbide selected from the group consisting of tar, pitch and other organic materials, or a hydrocarbon as a source of a chemical vapor deposition method.

The carbide of the other organic materials may be a carbide of sucrose, glucose, galactose, fructose, lactose, mannose, ribose, aldohexose or ketohexose and a carbide of an organic material selected from combinations thereof.

The artificial graphite secondary particle may have a D50 of 10 um to 25 um, specifically 12 um to 22 $\mu$m, and more specifically 13 um to 20 um. When the above range is satisfied, the artificial graphite secondary particles may be uniformly dispersed in the slurry, and the charging performance of a battery may also be improved.

The artificial graphite secondary particle may have a tap density of 0.85 g/cc to 1.30 g/cc, specifically 0.90 g/cc to 1.10 g/cc, and more specifically 0.90 g/cc to 1.07 g/cc. When the above range is satisfied, packing of artificial graphite secondary particles may be smoothly performed in the negative electrode, which means that the negative electrode adhesive force may be improved.

The natural graphite may be generally in the form of plate-like aggregates before being processed, and the plate-like particles may be manufactured in the form of a sphere having a smooth surface through post-treatment processing such as particle pulverization and re-assembly process for use as an active material for manufacture of an electrode.

The natural graphite used in an exemplary embodiment of the present disclosure may have a circularity of greater than 0.91 and 0.97 or less, or 0.93 to 0.97, or 0.94 to 0.96.

The natural graphite may have a particle diameter of 5 um to 30 um or 10 um to 25 um.

According to an exemplary embodiment of the present disclosure, a weight ratio of the artificial graphite and the natural graphite may be 5:5 to 9.5:0.5, or 5:5 to 9.3:0.7, or 5:5 to 9:1, or 6:4 to 9:1. When the weight ratio of the artificial graphite and the natural graphite satisfies such a range, better output may be exhibited, which may be advantageous in terms of life and rapid charging performance.

In an exemplary embodiment of the present disclosure, the planar conductive material that may be used as the negative electrode conductive material has a different structure and role from those of the carbon-based active material that is generally used as the negative electrode active material. Specifically, the carbon-based active material that is used as the negative electrode active material may be artificial graphite or natural graphite, and refers to a material that is processed into a spherical or point-like shape and used so as to facilitate storage and release of lithium ions.

On the other hand, the planar conductive material that is used as the negative electrode conductive material is a material having a plane or plate-like shape, and may be expressed as plate-like graphite. That is, the planar conductive material is a material that is included so as to maintain a conductive path in the negative electrode active material layer, and can refer to a material for securing a conductive path in a planar shape inside the negative electrode active material layer, rather than playing a role in storing and releasing lithium.

That is, in the present disclosure, the use of plate-like graphite as a conductive material means that graphite is processed into a planar or plate-like shape and used as a material for securing a conductive path rather than playing a role in storing or releasing lithium. In this case, the negative electrode active material included together has high-capacity characteristics with respect to storing and releasing lithium, and serves to store and release all lithium ions transferred from the positive electrode.

On the other hand, in the present disclosure, the use of a carbon-based active material as an active material means that the carbon-based active material is processed into a point-like or spherical shape and used as a material for storing or releasing lithium.

That is, in an exemplary embodiment of the present disclosure, artificial graphite or natural graphite, which is a carbon-based active material, may have a BET specific surface area that satisfies a range of 0.1 m$^2$/g or greater and 4.5 m$^2$/g or less. In addition, plate-like graphite, which is a planar conductive material, has a planar shape, and a BET specific surface area thereof may be 5 m$^2$/g or greater.

A representative example of the metal-based active material may be a compound containing any one or two or more metal elements selected from the group consisting of Al, Sn, Ag, Bi, Mg, Zn, In, Ge, Pb, Pd, Pt, Ti, Sb, Ga, Mn, Fe, Co, Ni, Cu, Sr, and Ba and the like. These metal compounds may be used in any form such as a single body, an alloy, an oxide (TiO$_2$, SnO$_2$ and the like), a nitride, a sulfide, a boride, and an alloy with lithium, but the single body, the alloy, the oxide, and the alloy with lithium may be increased in capacity.

When the second negative electrode active material satisfies the above composition and content as described above, a lithium secondary battery with improved overall performance such as cycle life characteristics can be manufactured. That is, in the present disclosure, the second negative electrode active material layer can serve as a buffer layer, and in order to solve the problems of surface degradation during charging and discharging, uniformity during pre-lithiation, and life characteristics, can includes the aforementioned SiOx (0<x<2) and/or carbon-based active material, making it possible to suppress a violent reaction with lithium ions on the surface of the second negative electrode active material layer.

In the end, the second negative electrode active material layer according to aspects of the present disclosure can have the above composition and content, which can solve the problem of surface degradation during continuous charging and discharging cycles, obtaining the effect of pre-lithiation even if pre-lithiation does not occur up to the first negative electrode active material layer during pre-lithiation, and at the same time, can provide a high-capacity and high-density negative electrode for a lithium secondary battery.

In an exemplary embodiment of the present disclosure, there is provided a negative electrode for a lithium secondary battery in which the second negative electrode active material is included in an amount of 60 parts by weight or more based on 100 parts by weight of the second negative electrode active material layer composition.

In another exemplary embodiment, based on 100 parts by weight of the second negative electrode active material layer composition, the second negative electrode active material may be included in an amount of 60 parts by weight or more, and preferably 65 parts by weight or more, and 95 parts by weight or less, preferably 90 parts by weight or less, and more preferably 85 parts by weight or less. Additionally, most preferably, the second negative electrode active material may be included in an amount of 75 parts by weight or more and 80 parts by weight or less.

The second negative electrode active material layer composition according to aspects of the present disclosure includes the second negative electrode active material, which has lower capacity characteristics than the first negative electrode active material but is less prone to particle breakage during the charging/discharging cycle or pre-lithiation, within the above range, and therefore, can enhance life characteristics without lowering the capacity performance of the negative electrode. In addition, when the second negative electrode active material is included within the content range as described above, the output characteristics can be increased, and thus the rapid charging performance is improved.

In an exemplary embodiment of the present disclosure, there is provided a negative electrode for a lithium secondary battery in which the second negative electrode active material layer includes a second negative electrode active material layer composition including a second negative electrode active material, a second negative electrode conductive material, and a second negative electrode binder.

In this case, the second negative electrode conductive material may include one or more selected from the group consisting of a point-like conductive material, a linear conductive material and a planar conductive material.

In an exemplary embodiment of the present disclosure, the point-like conductive material refers to a conductive material that may be used for improving conductivity of the negative electrode, has conductivity without causing a chemical change and has a point-like or spherical shape. Specifically, the point-like conductive material may be one or more species selected from the group consisting of natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide, and a polyphenylene derivative, and preferably may include carbon black in terms of high conductivity and excellent dispersibility.

In an exemplary embodiment of the present disclosure, the point-like conductive material may have a BET specific surface area of 40 m$^2$/g or greater and 70 m$^2$/g or less, preferably 45 m$^2$/g or greater and 65 m$^2$/g or less, and more preferably 50 m$^2$/g or greater and 60 m$^2$/g or less.

In an exemplary embodiment of the present disclosure, the particle diameter of the point-like conductive material may be 10 nm to 100 nm, preferably 20 nm to 90 nm, and more preferably 20 nm to 60 nm.

In an exemplary embodiment of the present disclosure, the second negative electrode conductive material may include a planar conductive material.

The planar conductive material can serve to improve conductivity by increasing surface contact between silicon particles in the negative electrode, and at the same time, to suppress the disconnection of the conductive path due to the volume expansion, and may be expressed as a plate-like conductive material or a bulk-type conductive material.

In an exemplary embodiment of the present disclosure, the planar conductive material may include one or more selected from the group consisting of plate-like graphite, graphene, graphene oxide, and graphite flake, and preferably may be plate-like graphite.

In an exemplary embodiment of the present disclosure, the average particle diameter (D50) of the planar conductive material may be 2 um to 7 um, specifically 3 um to 6 $\mu$m, and more specifically 4 um to 5 um. When the above range is satisfied, the sufficient particle size results in easy dispersion without causing an excessive increase in viscosity of the negative electrode slurry. Therefore, the dispersion effect is excellent when dispersing using the same equipment and time.

In an exemplary embodiment of the present disclosure, there is provided a negative electrode composition in which the planar conductive material has D10 of 0.5 um or greater and 1.5 um or less, D50 of 2.5 um or greater and 3.5 um or less and D90 of 7.0 um or greater and 15.0 um or less.

In an exemplary embodiment of the present disclosure, for the planar conductive material, a planar conductive material with a high specific surface area having a high BET specific surface area or a planar conductive material with a low specific surface area may be used.

In an exemplary embodiment of the present disclosure, for the planar conductive material, a planar conductive material with a high specific surface area or a planar conductive material with a low specific surface area may be used without limitation. However, in particular, the planar conductive material according to aspects of the present disclosure can be affected to some extent in the electrode performance by the dispersion effect, so that a planar conductive material with a low specific surface area that does not cause a problem in dispersion is used particularly preferably.

In an exemplary embodiment of the present disclosure, the planar conductive material may have a BET specific surface area of 5 m$^2$/g or greater.

In another exemplary embodiment, the planar conductive material may have a BET specific surface area of 5 m$^2$/g or greater and 500 m$^2$/g or less, preferably 5 m$^2$/g or greater and 300 m$^2$/g or less, and more preferably 5 m$^2$/g or greater and 250 m$^2$/g or less.

In another exemplary embodiment, the planar conductive material is a planar conductive material with a high specific surface area, and the BET specific surface area may satisfy a range of 50 m$^2$/g or greater and 500 m$^2$/g or less, preferably 80 m$^2$/g or greater and 300 m$^2$/g or less, and more preferably 100 m$^2$/g or greater and 300 m$^2$/g or less.

In another exemplary embodiment, the planar conductive material is a planar conductive material with a low specific surface area, and the BET specific surface area may satisfy a range of 5 m$^2$/g or greater and 40 m$^2$/g or less, preferably 5 m$^2$/g or greater and 30 m$^2$/g or less, and more preferably 5 m$^2$/g or greater and 25 m$^2$/g or less.

Other conductive materials may include linear conductive materials such as carbon nanotubes. The carbon nanotubes may be bundle-type carbon nanotubes. The bundle-type carbon nanotubes may include a plurality of carbon nanotube units. Specifically, the term 'bundle type' herein refers to, unless otherwise specified, a bundle or rope-shaped secondary shape in which a plurality of carbon nanotube units are aligned side by side in such an orientation that longitudinal axes of the carbon nanotube units are substantially the same, or are entangled. The carbon nanotube unit has a graphite sheet having a cylindrical shape with a nano-sized diameter, and has an sp2 bonding structure. In this case, the characteristics of a conductor or a semiconductor may be exhibited depending on the rolled angle and structure of the graphite sheet. As compared with entangled-type carbon nanotubes, the bundle-type carbon nanotubes can be more uniformly dispersed during the manufacture of the negative electrode, and can form more smoothly a conductive network in the negative electrode to improve the conductivity of the negative electrode.

In particular, the linear conductive material according to an exemplary embodiment of the present disclosure may be a single-walled carbon nanotube (SWCNT).

The single-walled carbon nanotube is a material in which carbon atoms arranged in a hexagonal shape form a tube, and exhibits non-conductor, conductor, or semiconductor properties depending on the unique chirality thereof, and has a tensile strength about 100-times higher than that of steel, has excellent flexibility, elasticity and the like, and also has chemically stable properties because carbon atoms are linked by strong covalent bonds.

The single-walled carbon nanotubes have an average diameter of 0.5 nm to 15 nm. According to an exemplary embodiment of the present disclosure, the single-walled carbon nanotubes may have an average diameter of 1 to 10 nm, or 1 nm to 5 nm, or 1 nm to 2 nm. When the average diameter of the single-walled carbon nanotubes satisfies such a range, the electrical conductivity of the negative electrode can be maintained even though the single-walled carbon nanotubes are included in a very small content, and preferred viscosity and solid can be derived during preparation of a conductive material dispersion solution. In the conductive material dispersion solution, single-walled carbon nanotubes are aggregated with each other, and therefore, may be present in an entangled state (aggregate). Therefore, after the diameter of any entangled single-walled carbon nanotube agglomerates extracted from the conductive material dispersion solution is confirmed by SEM or TEM, the average diameter may be derived by dividing the diameter of the aggregates by the number of single-walled carbon nanotubes constituting the aggregate.

The single-walled carbon nanotubes may have a BET specific surface area of 500 $m^2/g$ to 1,500 $m^2/g$, or 900 $m^2/g$ to 1,200 $m^2/g$, specifically 250 $m^2/g$ to 330 $m^2/g$. When the above range is satisfied, a conductive material dispersion solution having a preferred solid is derived, and the viscosity of the negative electrode slurry is prevented from being excessively increased. The BET specific surface area may be measured by a nitrogen adsorption BET method.

The single-walled carbon nanotubes may have an aspect ratio of 50 to 20,000, or may have a length of 5 to 100 um, or 5 to 50 um. When the aspect ratio or length satisfies such a range, the specific surface area is at a high level, so the single-walled carbon nanotubes in the negative electrode may be adsorbed to the active material particles by a strong attractive force. Accordingly, the conductive network can be smoothly maintained even during the volume expansion of the negative electrode active material. The aspect ratio may be confirmed by obtaining an average of aspect ratios of 15 single-walled carbon nanotubes with a large aspect ratio and 15 single-walled carbon nanotubes with a small aspect ratio when the single-walled carbon nanotube powder is observed by a scanning electron microscope (SEM).

Since the single-walled carbon nanotubes have a larger aspect ratio than those of multi-walled carbon nanotubes and double-walled carbon nanotubes, the single-walled carbon nanotubes have a long length and a large volume, and thus are advantageous in that an electrical network can be constructed even though only a small amount is used.

In an exemplary embodiment of the present disclosure, the second negative electrode conductive material may satisfy a range of 1 part by weight or more and 40 parts by weight or less, based on 100 parts by weight of the second negative electrode active material layer composition.

In another exemplary embodiment, the second negative electrode conductive material may be included in an amount of 1 part by weight or more and 40 parts by weight or less, preferably 10 parts by weight or more and 30 parts by weight or less, and more preferably 15 parts by weight or more and 25 parts by weight or less, based on 100 parts by weight of the second negative electrode active material layer composition.

In an exemplary embodiment of the present disclosure, the second negative electrode conductive material may include a point-like conductive material, a planar conductive material, and a linear conductive material, and a ratio of the point-like conductive material: the planar conductive material: the linear conductive material may satisfy 1:1:0.01 to 1:1:1.

In an exemplary embodiment of the present disclosure, the point-like conductive material may satisfy a range of 1 part by weight or more and 60 parts by weight or less, preferably 5 parts by weight or more and 50 parts by weight or less, and more preferably 10 parts by weight or more and 50 parts by weight or less, based on 100 parts by weight of the second negative electrode conductive material.

In an exemplary embodiment of the present disclosure, the planar conductive material may satisfy a range of 1 part by weight or more and 60 parts by weight or less, preferably 5 parts by weight or more and 50 parts by weight or less, and more preferably 10 parts by weight or more and 50 parts by weight or less, based on 100 parts by weight of the second negative electrode conductive material.

In an exemplary embodiment of the present disclosure, the linear conductive material may satisfy a range of 0.01 part by weight or more and 10 parts by weight or less, preferably 0.05 part by weight or more and 8 parts by weight or less, and more preferably 0.1 part by weight or more and 5 parts by weight or less, based on 100 parts by weight of the second negative electrode conductive material.

In an exemplary embodiment of the present disclosure, the second negative electrode conductive material may include a linear conductive material, and a planar conductive material.

In an exemplary embodiment of the present disclosure, the second negative electrode conductive material may include a linear conductive material and a planar conductive material, and a ratio of the linear conductive material to the planar conductive material may satisfy 0.01:1 to 0.1:1.

In an exemplary embodiment of the present disclosure, when the second negative electrode conductive material particularly includes the linear conductive material and the planar conductive material and the composition and ratio described above are satisfied, respectively, the life characteristics of an existing lithium secondary battery are not significantly affected, and points available for charging and discharging increase, resulting in excellent output characteristics at a high C-rate.

There is provided a negative electrode for a lithium secondary battery in which the first negative electrode conductive material according to the present disclosure includes at least a linear conductive material.

There is provided a negative electrode for a lithium secondary battery in which the second negative electrode conductive material according to the present disclosure includes at least a linear conductive material.

In an exemplary embodiment of the present disclosure, the second negative electrode conductive material may be composed of a linear conductive material.

The second negative electrode conductive material according to aspects of the present disclosure has a completely different configuration from a positive electrode conductive material that is applied to the positive electrode. That is, the second negative electrode conductive material according to the present disclosure serves to hold the contact between silicon-based active materials whose volume expansion of the electrode is very large due to charging and discharging, and the positive electrode conductive material serves to impart some conductivity while serving as a buffer when roll-pressed, and is completely different from the negative electrode conductive material according to aspects of the present disclosure in terms of configuration and role.

In addition, the second negative electrode conductive material according to aspects of the present disclosure is provided to a silicon-based active material, and has a completely different configuration from that of a conductive material that is provided to a graphite-based active material. That is, since a conductive material that is used for an electrode having a graphite-based active material simply has smaller particles than the active material, the conductive material has characteristics of improving output characteristics and imparting some conductivity, and is completely different from the conductive material that is applied together with the silicon-based active material as in the present disclosure, in terms of configuration and role.

In this case, the same description as that of the second negative electrode conductive material described above may be applied to the first negative electrode conductive material.

In an exemplary embodiment of the present disclosure, there is provided a negative electrode for a lithium secondary battery in which a thickness of the first negative electrode active material layer is 10 um or greater and 200 um or less and a thickness of the second negative electrode active material layer is 10 um or greater and 100 um or less. The first negative electrode active material layer and the second negative electrode active material layer may be formed on both surfaces of the negative electrode current collector layer, and the thicknesses may be the same as described above.

In an exemplary embodiment of the present disclosure, there is provided a negative electrode for a lithium secondary battery in which a loading amount (a) of the first negative electrode active material layer composition satisfies two times or more than a loading amount (b) of the second negative electrode active material layer composition.

In another exemplary embodiment, the loading amount (a) of the first negative electrode active material layer composition may satisfy a range of 1.5 times or more and 10 times or less, preferably 2.2 times or more and 6 times or less than the loading amount (b) of the second negative electrode active material layer composition.

The loading amount may mean a weight of the composition for forming the negative electrode active material layer, and specifically, the loading amount of the composition may have the same meaning as the loading amount of the slurry containing the composition.

In an exemplary embodiment of the present disclosure, the loading amount (a) of the first negative electrode active material layer composition may satisfy a range of 2 mg/cm$^2$ or more and 5 mg/cm$^2$ or less, and preferably 2.2 mg/cm$^2$ or more and 4 mg/cm$^2$ or less.

In an exemplary embodiment of the present disclosure, the loading amount (b) of the second negative electrode active material layer composition may satisfy a range of 0.5 mg/cm$^2$ or more and 1.5 mg/cm$^2$ or less, and preferably 0.8 mg/cm$^2$ or more and 1.3 mg/cm$^2$ or less.

When the first negative electrode active material layer composition and the second negative electrode active material layer composition have the loading amounts described above, the ratio of the active materials included in the first negative electrode active material layer and the second negative electrode active material layer may be adjusted. That is, the capacity characteristics can be optimized by adjusting the amount of the first negative electrode active material included in the first negative electrode active material layer, and at the same time, the surface reaction of the negative electrode can be suppressed to enhance the life characteristics without lowering the capacity characteristics by adjusting accordingly the amount of the second negative electrode active material included in the second negative electrode active material layer.

In an exemplary embodiment of the present disclosure, a negative electrode for a lithium secondary battery may be a pre-lithiated negative electrode.

In an exemplary embodiment of the present disclosure, the first negative electrode active material layer may be formed on an entire surface of the negative electrode current collector layer, and the second negative electrode active material layer may be formed on an entire surface of the first negative electrode active material layer.

An exemplary embodiment of the present disclosure provides a method for manufacturing a negative electrode for a lithium secondary battery, the method including: preparing a negative electrode current collector layer; forming a first negative electrode active material layer by applying a first negative electrode active material layer composition including a first negative electrode active material to one surface or both surfaces of the negative electrode current collector layer; and forming a second negative electrode active material layer by applying a second negative electrode active material layer composition including a second negative electrode active material to a surface of the first negative electrode active material layer opposite to a surface of the first negative electrode active material layer facing the negative electrode current collector layer, wherein the first negative electrode active material includes one or more selected from the group consisting of $SiOx$ (x=0) and $SiOx$ (0<x<2), and includes $SiOx$ (x=0) in an amount of 95 parts by weight or more based on 100 parts by weight of the first negative electrode active material, wherein the second negative electrode active material includes a mixture of one or more selected from the group consisting of a carbon-based active material, a silicon-based active material, a metal-based active material capable of forming an alloy with lithium, and a lithium-containing nitride, wherein the first negative electrode active material layer composition includes a first negative electrode binder, and wherein the first negative electrode binder includes a PAM or PAA-based polymer aqueous binder and a rubber-based binder, and satisfies the Equation 1 above.

In the method for manufacturing a negative electrode, the above-described descriptions may be applied to the composition and content included in each step.

An exemplary embodiment of the present disclosure includes forming a first negative electrode active material layer by applying the first negative electrode active material layer composition on one surface or both surfaces of the negative electrode current collector layer.

That is, this step involves forming an active material layer on the negative electrode current collector layer, and includes forming an active material layer on a surface (a lower part of the layer), which is in contact with the current collector layer, of a double layer structure. Additionally, when first negative electrode active material layers are formed on both surfaces of the negative electrode current collector layer, the second negative electrode active material layer may be applied to one surface or both surfaces of the first negative electrode active material layers.

In an exemplary embodiment of the present disclosure, applying the first negative electrode active material layer composition may include applying and drying a first negative electrode slurry including a first negative electrode active material layer composition, and a negative electrode slurry solvent.

In this case, a solid content of the first negative electrode slurry may satisfy a range of 10% to 40%.

In an exemplary embodiment of the present disclosure, forming of the first negative electrode active material layer may include mixing the first negative electrode slurry; and coating the mixed first negative electrode slurry on one surface or both surfaces of the negative electrode current collector layer, and the coating may be performed using a coating method that is commonly used in the art.

An exemplary embodiment of the present disclosure includes forming a second negative electrode active material by applying a second negative electrode active material layer composition to a surface of the first negative electrode active material layer that is opposite to a surface of the first negative electrode active material layer that is in contact with the negative electrode current collector layer.

That is, this step involves forming a second negative electrode active material layer on the first negative electrode active material layer, and may include forming an active material layer on a surface (upper part of the layer), which is apart from the current collector layer, of the double layer structure.

In an exemplary embodiment of the present disclosure, applying the second negative electrode active material layer composition may include applying and drying a second negative electrode slurry including a second negative electrode active material layer composition, and a negative electrode slurry solvent.

In this case, a solid content of the second negative electrode slurry may satisfy a range of 10% to 40%.

In an exemplary embodiment of the present disclosure, there is provided a method for manufacturing a negative electrode for a lithium secondary battery in which forming of the second negative electrode active material layer may include mixing the second negative electrode slurry, and coating the mixed second negative electrode slurry on a surface of the first negative electrode active material layer opposite to a surface of the first negative electrode active material layer that is in contact with the negative electrode current collector layer.

The coating may be performed using a coating method that is commonly used in the art.

The description of the forming of the first negative electrode active material layer may be applied to the forming of the second negative electrode active material layer in the same manner.

In an exemplary embodiment of the present disclosure, there is provided a method for manufacturing a negative electrode for a lithium secondary battery in which forming of the second negative electrode active material layer on the first negative electrode active material layer may include a wet on dry process, or a wet on wet process.

In an exemplary embodiment of the present disclosure, the wet on dry process may refer to a process of applying the first negative electrode active material layer composition, drying the composition partially or completely, and applying the second negative electrode active material layer composition on top of the composition.

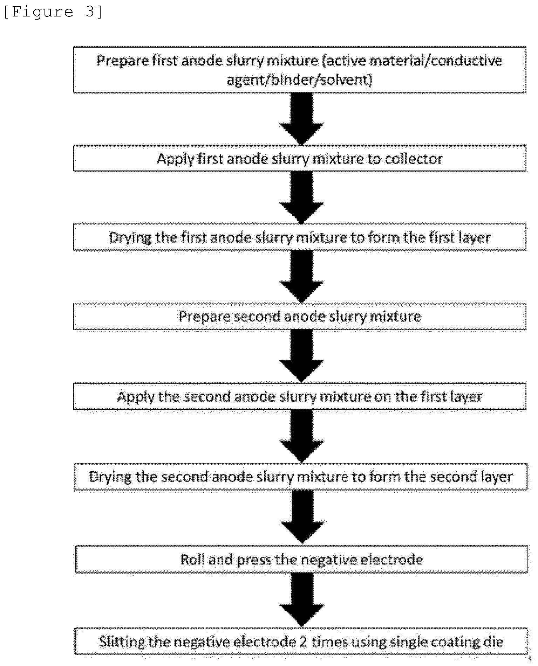

FIG. 3 is a flowchart showing a wet on dry process according to an exemplary embodiment of the present disclosure. Specifically, in the wet on dry process, a first negative electrode slurry mixture (first negative electrode active material, first negative electrode conductive material, first negative electrode binder, first solvent) is prepared and applied to the negative electrode current collector layer. Thereafter, the first negative electrode slurry mixture is dried to form a first negative electrode active material layer. Thereafter, a second negative electrode slurry mixture is prepared, applied to the first negative electrode active material layer, and dried to form a second negative electrode active material layer.

Thereafter, each layer may be rolled and pressed to form a negative electrode for a lithium secondary battery according to aspects of the present disclosure.

In an exemplary embodiment of the present disclosure, the wet on wet process refers to a process of applying the first negative electrode active material layer composition and applying the second negative electrode active material layer composition on top of the first negative electrode active material layer composition without drying the same.

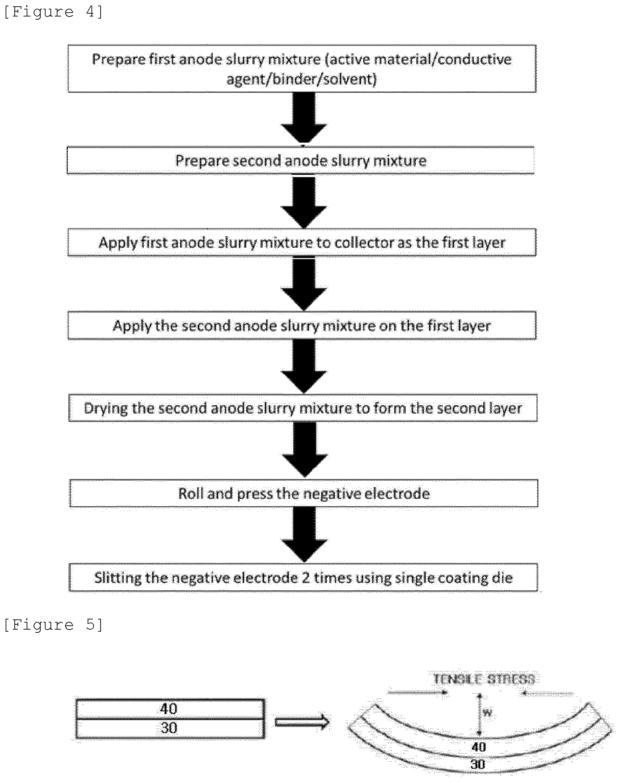

FIG. 4 is a flowchart showing a wet on wet process according to an exemplary embodiment of the present disclosure. Specifically, in the wet on wet process, a first negative electrode slurry mixture is prepared and applied to a negative electrode current collector layer, and at the same time, a second negative electrode slurry mixture is prepared and applied to the first negative electrode slurry mixture, and then, the first and second negative electrode slurry mixtures are dried. Thereafter, each layer may be rolled and pressed to form a negative electrode for a lithium secondary battery according to aspects of the present disclosure.

In an exemplary embodiment of the present disclosure, there is provided a method for manufacturing a negative electrode for a lithium secondary battery in which the step of forming the second negative electrode active material layer on the first negative electrode active material layer includes a wet on dry process, and the wet on dry process includes applying the first negative electrode active material layer composition, forming the first negative electrode active material layer by drying partially or completely the applied first negative electrode active material layer composition, and applying the second negative electrode active material layer composition to the first negative electrode active material layer.

In an exemplary embodiment of the present disclosure, there is provided a method for manufacturing a negative electrode for a lithium secondary battery in which the step of forming the second negative electrode active material layer on the first negative electrode active material layer includes a wet on wet process, and the wet on wet process includes applying the first negative electrode active material layer composition, and applying the second negative electrode active material layer composition to the first negative electrode active material layer composition in an undried state of the first negative electrode active material layer composition.

In particular, the wet on dry process is performed to apply the first negative electrode active material layer composition, to dry the composition partially or completely, and then to apply the second negative electrode active material layer composition on top of the first negative electrode active material layer composition, making it possible for the first negative electrode active material layer and the second negative electrode active material layer to have a clear boundary through the processes as described above. Accordingly, the compositions included in the first negative electrode active material layer and the second negative electrode active material layer are not mixed, making it possible to configure a double layer.

In an exemplary embodiment of the present disclosure, the negative electrode slurry solvent may be used without limitation as long as it can dissolve the first negative electrode active material layer composition and the second negative electrode active material layer composition, and specifically, water or N-methyl pyrrolidone (NMP) may be used.

As a result of the wet on wet process described above, a junction region in which the first negative electrode active material layer and the second negative electrode active material layer are mixed may be formed. In this case, in order for the wet on wet process to occur, the viscosity of the first negative electrode active material layer composition may be lower than that of the second negative electrode active material layer composition such that intermixing occurs at the junction region and the process can proceed.

Embodiments of a negative electrode for a lithium secondary battery as described above includes, as the first negative electrode active material layer, SiOx (x=0) for enhancing capacity characteristics, and includes, as the second negative electrode active material layer, the above-described specific compositions of silicon-based active material and/or carbon-based active material, so that it is possible to take the advantage of rapid charging. Furthermore, since the second negative electrode active material has the above composition and thus is highly irreversible, a particularly advantageous effect may be obtained even in a pre-lithiation process in which the negative electrode is charged in advance. As compared with a case where only a first negative electrode active material layer is simply applied, the second negative electrode active material layer has the second negative electrode active material having the above composition, enabling a uniform pre-lithiation process on top of the negative electrode and thus further improving the life.

In an exemplary embodiment of the present disclosure, porosities of the first and second negative electrode active material layers may satisfy a range of 10% or greater and 60% or less.

In another exemplary embodiment, the porosities of the first and second negative electrode active material layers may satisfy a range of 10% or greater and 60% or less, preferably 20% or greater and 50% or less, and more preferably 30% or greater and 45% or less.

The porosity varies depending on the compositions and contents of the active materials, conductive materials and binders included in the first and second negative electrode active material layers, and accordingly, the electrode has the electrical conductivity and resistance within appropriate ranges.

An exemplary embodiment of the present disclosure provides a lithium secondary battery including a positive electrode; a negative electrode for a lithium secondary battery according to aspects of the present disclosure; a separator provided between the positive electrode and the negative electrode; and an electrolyte.

The secondary battery according to an exemplary embodiment of the present disclosure may particularly include a negative electrode for a lithium secondary battery described above. Specifically, the secondary battery may include a negative electrode, a positive electrode, a separator interposed between the positive electrode and the negative electrode, and an electrolyte, and the negative electrode may be the same as the negative electrode described above. Since the negative electrode has been described above, a detailed description thereof is omitted.

The positive electrode may include a positive electrode current collector and a positive electrode active material layer formed on the positive electrode current collector and including the positive electrode active material.

In the positive electrode, the positive electrode current collector is not particularly limited as long as it has conductivity without causing a chemical change in the battery. For example, stainless steel, aluminum, nickel, titanium, fired carbon, aluminum or stainless steel each surface-treated with carbon, nickel, titanium, silver, or the like, or the like may be used. In addition, the positive electrode current collector may typically have a thickness of 3 to 500 um, and a surface of the current collector may be formed with microscopic irregularities to enhance adhesive force of the positive electrode active material. For example, the positive electrode current collector may be used in various forms such as a film, a sheet, a foil, a net, a porous body, a foamed body, and a non-woven fabric body.

The positive electrode active material may be a positive electrode active material that is typically used. Specifically, the positive electrode active material may be a layered compound such as a lithium cobalt oxide ($LiCoO_2$) and a lithium nickel oxide ($LiNiO_2$), or a compound substituted with one or more transition metals; a lithium iron oxide such as $LiFe_3O_4$; a lithium manganese oxide such as chemical formula $Li_{1+c1}Mn_{2-c1}O_4$ ($0 \leq c1 \leq 0.33$), $LiMnO_3$, $LiMn_2O_3$ and $LiMnO_2$; a lithium copper oxide ($Li_2CuO_2$); a vanadium oxide such as $LiV_3O_8$, $V_2O_5$ and $Cu_2V_2O_2$; Ni-site type lithium nickel oxide represented by chemical formula $LiNi_{1-c2}M_{c2}O_2$ (where M is at least one selected from the group consisting of Co, Mn, Al, Cu, Fe, Mg, B, and Ga, and satisfies $0.01 \leq c2 \leq 0.6$); a lithium manganese composite oxide represented by chemical formula $LiMn_{2-c3}M_{c3}O_2$ (where M is at least one selected from the group consisting of Co, Ni, Fe, Cr, Zn and Ta, and satisfies $0.01 \leq c3 \leq 0.6$) or $Li_2Mn_3MO_8$ (where M is at least one selected from the group consisting of Fe, Co, Ni, Cu and Zn.); $LiMn_2O_4$ in which a part of Li of the chemical formula is substituted with an alkaline earth metal ion, or the like, but is not limited thereto. The positive electrode may be Li metal.

In an exemplary embodiment of the present disclosure, the positive electrode active material includes a lithium composite transition metal compound including nickel (Ni), cobalt (Co), and manganese (Mn), the lithium composite transition metal compound includes single particles or secondary particles, and an average particle diameter (D50) of the single particles may be 1 um or greater.

For example, the average particle diameter (D50) of the single particles may be 1 um or greater and 12 um or less, 1 um or greater and 8 um or less, 1 um or greater and 6 um or less, greater than 1 um and 12 um or less, greater than 1 um and 8 um or less, or greater than 1 um and 6 um or less.

Even when the single particles are formed with a small average particle diameter (D50) of 1 um or greater and 12 um or less, the particle strength may be excellent. For example, the single particle may have a particle strength of 100 to 300 MPa when roll-pressing with a force of 650 kgf/cm$^2$. Accordingly, even when the single particles are roll-pressed with a strong force of 650 kgf/cm$^2$, the increase in the phenomenon of micro-particles in an electrode due to particle breakage is alleviated, thereby improving the lifetime characteristic of the battery.

The single particles may be manufactured by mixing and firing a transition metal precursor and a lithium source material. The secondary particles may be manufactured by a method different from that of the single particles, in certain aspects, and the composition thereof may be the same as or different from that of the single particles.

The method of forming the single particles is not particularly limited, but generally can be formed by over-firing with raised firing temperature, or may be manufactured by using additives such as grain growth promoters that help over-firing, or by changing a starting material.

For example, the firing is performed at a temperature at which single particles can be formed. To this end, the firing should be performed at a temperature higher than a temperature during manufacture of the secondary particles. For example, when the composition of the precursor is the same, the firing should be performed at a temperature about 30°C to 100°C higher than a temperature during manufacture of the secondary particles. The firing temperature for forming the single particles may vary depending on the metal composition in the precursor. For example, when forming single particles with a high-Ni nickel-cobalt-manganese (NCM)-based lithium composite transition metal oxide having a nickel (Ni) content of 80 mol% or more, the firing temperature may be about 700°C to 1000°C, and preferably about 800°C to 950°C. When the firing temperature satisfies the above range, a positive electrode active material including single particles having excellent electrochemical properties can be manufactured. If the firing temperature is below 790°C, a positive electrode active material including a lithium composite transition metal compound in the form of secondary particles may be manufactured, and if the firing temperature exceeds 950°C, excessive firing occurs and a layered crystal structure is not properly formed, so that the electrochemical properties may be deteriorated.

In the present disclosure, the single particle is a term used to distinguish the same from typical secondary particles resulting from aggregation of tens to hundreds of primary particles, and is a concept including a single particle consisting of one primary particle and a quasi-single particle form that is an aggregate of 30 or less primary particles.

Specifically, in the present disclosure, the single particle may be a single particle consisting of one primary particle or a quasi-single particle form that is an aggregate of 30 or less primary particles, and the secondary particle may be an aggregate form of hundreds of primary particles.

In the exemplary embodiment of the present disclosure, the lithium composite transition metal compound, which is the positive electrode active material, further includes secondary particles, and the average particle diameter (D50) of the single particles is smaller than the average particle diameter (D50) of the secondary particles.

In the present disclosure, the single particle may be a single particle consisting of one primary particle or a quasi-single particle form that is an aggregate of 30 or less primary particles, and the secondary particle may be an aggregate form of hundreds of primary particles.

The above-described lithium composite transition metal compound may further include secondary particles. The secondary particle refers to a form formed by aggregation of primary particles, and can be distinguished from the concept of a single particle including one primary particle, one single particle and a quasi-single particle form, which is an aggregate of 30 or less primary particles.

The secondary particle may have a particle diameter (D50) of 1 um to 20 um, 2 um to 17 um, and preferably 3 um to 15 um. The specific surface area (BET) of the secondary particles may be 0.05 m$^2$/g to 10 m$^2$/g, preferably 0.1 m$^2$/g to 1 m$^2$/g, and more preferably 0.3 m$^2$/g to 0.8 m$^2$/g.

In a further exemplary embodiment of the present disclosure, the secondary particle is an aggregate of primary particles, and the average particle diameter (D50) of the primary particles is 0.5 um to 3 um. Specifically, the secondary particle may be an aggregate form of hundreds of primary particles, and the average particle diameter (D50) of the primary particles may be 0.6 um to 2.8 um, 0.8 um to 2.5 um, or 0.8 um to 1.5 um.

When the average particle diameter (D50) of the primary particles satisfies the above range, a single-particle positive electrode active material having excellent electrochemical properties can be formed. If the average particle diameter (D50) of the primary particles is too small, the number of aggregates of primary particles forming lithium nickel-based oxide particles increases, reducing the effect of suppressing particle breakage during roll-pressing, and if the average particle diameter (D50) of the primary particles is too large, a lithium diffusion path inside the primary particles may be lengthened, increasing a resistance and degrading an output characteristic.

According to a further exemplary embodiment of the present disclosure, the average particle diameter (D50) of the single particles is smaller than the average particle diameter (D50) of the secondary particles. As a result, the single particles may have excellent particle strength even if they are formed with a small particle diameter, and accordingly, the increase phenomenon of micro-particles in an electrode due to particle breakage is alleviated, thereby improving the lifetime characteristic of the battery.

In the exemplary embodiment of the present disclosure, the average particle diameter (D50) of the single particles is smaller than the average particle diameter (D50) of the secondary particles by 1 um to 18 um.

For example, the average particle diameter (D50) of the single particles may be 1 um to 16 um smaller, 1.5 um to 15 um smaller, or 2 um to 14 um smaller than the average particle diameter (D50) of the secondary particles.

When the average particle diameter (D50) of the single particles is smaller than the average particle diameter (D50) of the secondary particles, for example, when the above range is satisfied, the single particles may have excellent particle strength even if they are formed with a small particle diameter, and as a result, the increase phenomenon of micro-particles in an electrode due to particle breakage is alleviated, thereby improving the lifetime characteristic of the battery and the energy density.

According to a further exemplary embodiment of the present disclosure, the single particles are included in an amount of 15 parts by weight to 100 parts by weight based on 100 parts by weight of the positive electrode active material. The single particles may be included in an amount of 20 parts by weight to 100 parts by weight, or 30 parts by weight to 100 parts by weight based on 100 parts by weight of the positive electrode active material.

For example, the single particles may be included in an amount of 15 parts by weight or more, 20 parts by weight or more, 25 parts by weight or more, 30 parts by weight or more, 35 parts by weight or more, 40 parts by weight or more, or 45 parts by weight or more based on 100 parts by weight of the positive electrode active material. The single particles may be included in an amount of 100 parts by weight or less based on 100 parts by weight of the positive electrode active material.

When the single particles are included within the above range, excellent battery characteristics may be exhibited in combination with the negative electrode material described above. In particular, when the single particles are included in an amount of 15 parts by weight or more, the increase in the phenomenon of micro-particles in an electrode due to particle breakage in a roll-pressing process after fabrication of an electrode can be alleviated, thereby improving the lifetime characteristics of the battery.

In the exemplary embodiment of the present disclosure, the lithium composite transition metal compound may further include secondary particles, and the secondary particles may be included in an amount of 85 parts by weight or less based on 100 parts by weight of the positive electrode active material. The secondary particles may be included in an amount of 80 parts by weight or less, 75 parts by weight or less, or 70 parts by weight or less based on 100 parts by weight of the positive electrode active material. The secondary particles may be included in an amount of 0 part by weight or more based on 100 parts by weight of the positive electrode active material.

When the above range is satisfied, the above-described effects due to the existence of the single particles in the positive electrode active material can be maximized. In the case in which the positive electrode active material of the secondary particles is included, the components thereof may be the same as or different from those exemplified in the single-particle positive electrode active material described above, and may refer to an aggregate form of single particles.

In the exemplary embodiment of the present disclosure, the positive electrode active material in 100 parts by weight of the positive electrode active material layer may be included in an amount of 80 parts by weight or more and 99.9 parts by weight or less, preferably 90 parts by weight or more and 99.9 parts by weight or less, more preferably 95 parts by weight or more and 99.9 parts by weight or less, most preferably 98 parts by weight or more and 99.9 parts by weight or less.

The positive electrode active material layer may include a positive electrode conductive material and a positive electrode binder together with the positive electrode active material described above.

In this case, the positive electrode conductive material is used to impart conductivity to the electrode, and can be used without particular limitation as long as the positive electrode conductive material has electronic conductivity without causing a chemical change in a battery to be constituted. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve bonding between particles of the positive electrode active material and adhesive force between the positive electrode active material and the positive electrode current collector. Specific examples may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture of two or more thereof may be used.

The separator serves to separate the negative electrode and the positive electrode and to provide a movement path of lithium ions, in which any separator may be used as the separator without particular limitation as long as it is typically used in a secondary battery, and particularly, a separator having high moisture-retention ability for an electrolyte solution as well as a low resistance to the movement of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a usual porous non-woven fabric, for example, a non-woven fabric formed of high melting point glass fibers, polyethylene terephthalate fibers, or the like may be used. Furthermore, a coated separator including a ceramic component or a polymer material may be used to secure heat resistance or mechanical strength, and the separator having a single layer or multilayer structure may be selectively used.

Examples of the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but are not limited thereto.

Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimetoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate and diethyl carbonate, in a suitable ratio and used, an electrolyte having high electric conductivity may be prepared, and therefore, may be more preferably used.

A lithium salt may be used as the metal salt, and the lithium salt is a material that is readily soluble in the non-aqueous electrolyte solution, in which, for example, one or more selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$,

$(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN-$ and $(CF_3CF_2SO_2)_2N^-$ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving life characteristics of the battery, suppressing a decrease in battery capacity, improving discharge capacity of the battery, and the like, in addition to the above-described electrolyte components.

An exemplary embodiment of the present disclosure provides a battery module including the secondary battery as a unit cell, and a battery pack including the same. Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

Mode for Invention

Hereinafter, preferred examples will be provided for better understanding of the present disclosure. It will be apparent to one skilled in the art that the examples are only provided to illustrate the present disclosure and various modifications and alterations are possible within the scope and technical spirit of the present disclosure. Such modifications and alterations naturally fall within the scope of claims included herein.

**<Preparation Example>**

**Example 1**

**Preparation of Negative Electrode**

**Preparation of First Negative Electrode Active Material Layer**

Si (average particle diameter (D50): 5 um) as a silicon-based active material, a second conductive material, a third conductive material, and as a binder, polyacrylamide (PAM) as an aqueous binder and SBR serving as a rubber-based binder were added to distilled water serving as a solvent for formation of a negative electrode slurry at a weight ratio of 89:0:1:4.5:5.5 to prepare a negative electrode slurry (solid concentration: 28 wt%).

The second conductive material was plate-like graphite (specific surface area: 17 $m^2$/g, average particle diameter (D50): 3.5 um), and the third conductive material was carbon nanotubes.

As a specific mixing method, after dispersing the second conductive material, the third conductive material, the binder and water at 2500 rpm for 30 minutes with a homo mixer, the silicon-based active material was added to the dispersion, which was then dispersed at 2500 rpm for 30 minutes to prepare a negative electrode slurry.

**Preparation of Second Negative Electrode Active Material Layer**

A second negative electrode active material layer composition was prepared using SiO (average particle diameter (D50): 6 um) as a silicon-based active material, a second conductive material, a third conductive material, and as a binder, polyacrylamide (PAM) as an aqueous a binder and SBR as a rubber-based binder at a weight ratio of 80:9.5:0.5:10:0. A second negative electrode slurry was prepared by adding the composition to distilled water as a solvent for formation of a negative electrode slurry (solid concentration: 25 wt%).

The second conductive material was plate-like graphite (specific surface area: 17 $m^2$/g, average particle diameter (D50): 3.5 um), and the third conductive material was carbon nanotubes.

As a mixing method, after dispersing the second conductive material, the third conductive material, the binder and water at 2500 rpm for 30 minutes with a homo mixer, the active material was added to the dispersion, and the resultant mixture was dispersed at 2500 rpm for 30 minutes to prepare a second negative electrode slurry.

The negative electrode slurry was coated on both surfaces of a copper current collector (thickness: 26 um) serving as a negative electrode current collector layer with a loading amount of 87.7 mg/25 $cm^2$, and the second negative electrode slurry was coated on the first negative electrode active material layer with a loading amount of 20 mg/$cm^2$, which was then roll-pressed and dried in a vacuum oven at 130°C for 10 hours to form a first negative electrode active material layer (thickness: 41 um) and a second negative electrode active material layer (thickness: 15 $\mu$m).

In Example 1, a negative electrode satisfying the composition and content in Table 1 below was prepared using the first negative electrode active material layer and the second negative electrode active material layer.

[Table 1]

| | First negative electrode active material layer | | | | | | | Second negative electrode active material layer | | | | |
|---|---|---|---|---|---|---|---|---|---|---|---|---|
| | Si | Second conductive material | Third conductive material | Aqueous binder | Rubber-based binder | Equation 1 | thickness ($\mu$m) | SiO | Second conductive material | Third conductive material | Aqueous binder | Rubber-based binder |
| Example 1 | 89 | - | 1 | 4.5 | 5.5 | 1.2 | 41 | 80 | 9.5 | 0.5 | 10 | - |
| Example 2 | 89 | - | 1 | 3.3 | 6.7 | 2 | 41 | 80 | 9.5 | 0.5 | 10 | - |
| Example 3 | 80 | 9.5 | 0.5 | 4.5 | 5.5 | 1.2 | 43 | 80 | 9.5 | 0.5 | 10 | - |
| Example 4 | 89 | - | 1 | 4.5 | 5.5 | 1.2 | 41 | 65 | 19.5 | 0.5 | 15 | - |
| Example 5 | 80 | 9.5 | 0.5 | 4.5 | 5.5 | 1.2 | 43 | 65 | 19.5 | 0.5 | 15 | - |
| Example 6 | 89 | - | 1 | 4.5 | 5.5 | 1.2 | 41 | 80 | 9.5 | 0.5 | 4.5 | 5.5 |
| Comparative Example 1 | 89 | - | 1 | 4.5 | 5.5 | 1.2 | 80 | - | - | - | - | - |
| Comparative Example 2 | 89 | - | 1 | 10 | - | - | 80 | - | - | - | - | - |
| Comparative Example 3 | 89 | - | 1 | - | 10 | - | 80 | - | - | - | - | - |
| Comparative Example 4 | 89 | - | 1 | 10 | - | - | 41 | 80 | 9.5 | 0.5 | 10 | - |
| Comparative Example 5 | 89 | - | 1 | - | 10 | - | 41 | 80 | 9.5 | 0.5 | 10 | - |
| Comparative Example 6 | 89 | - | 1 | 1.6 | 8.4 | 5.25 | 41 | 80 | 9.5 | 0.5 | 10 | - |
| Comparative Example 7 | 89 | - | 1 | 6 | 4 | 0.66 | 41 | 80 | 9.5 | 0.5 | 10 | - |

For reference, Comparative Examples 1 to 3 in Table 1 are not provided with a second negative electrode active material layer. That is, Comparative Examples 1 to 3 are negative electrodes with a single layer structure having a single negative electrode active material layer. In other words, Comparative Examples 1 to 3 correspond to negative electrodes each prepared by applying only the first negative electrode active material layer slurry on the negative electrode current collector layer and then drying the same.

**<Preparation of Secondary Battery>**

A positive electrode slurry (solid concentration: 78 wt%) was prepared by adding $LiNi_{0.6}Co_{0.2}Mn_{0.2}O_2$ (average particle diameter (D50): 15 um) as a positive electrode active material, carbon black (product name: Super C65, manufacturer: Timcal) as a conductive material, and polyvinylidene fluoride (PVdF) as a binder to N-methyl-2-pyrrolidone (NMP) as a solvent for formation of a positive electrode slurry at a weight ratio of 97:1.5:1.5.

The positive electrode slurry was coated on both surfaces of an aluminum current collector (thickness: 12 um) serving as a positive electrode current collector with a loading amount of 537 mg/25 $cm^2$, which was then roll-pressed and dried in a vacuum oven at 130°C for 10 hours to form a positive electrode active material layer (thickness: 65 um), whereby a positive electrode was prepared (thickness of the positive electrode: 77 um, porosity: 26%).

A secondary battery of Example 1 was prepared by interposing a polyethylene separator between the positive electrode and the negative electrode of Example 1 and injecting an electrolyte.

The electrolyte was obtained by adding vinylene carbonate to an organic solvent, in which fluoroethylene carbonate (FEC) and diethyl carbonate (DEC) were mixed at a volume ratio of 10:90, in an amount of 3 wt% on the basis of a total weight of the electrolyte and adding $LiPF_6$ as a lithium salt to a concentration of 1M.

Secondary batteries were each prepared in the same manner as in the above method, except that the negative electrodes of the Examples and Comparative Examples were used.

**Experimental Example 1: Evaluation of monocell life**

For the secondary batteries including the negative electrodes prepared in the Examples and Comparative Examples, the life and the capacity retention rate were evaluated using an electrochemical charging and discharging device. The secondary batteries were subjected to a cycle test at 4.2-3.0 V 1 C/0.5 C, and the number of cycles at which the capacity retention rate reached 80% was measured.

capacity retention rate (%) = {(discharge capacity at Nth cycle)/(discharge capacity at first cycle)}×100

The results are shown in Table 2 below.

**Experimental Example 2: Evaluation of Resistance Increase Rate Measurement**

After the capacity retention rates were measured by charging/discharging the secondary batteries at 0.33 C/0.33 C (4.2-3.0V) every 50 cycles during the test in Experimental Example 1, the resistance increase rates were compared and analyzed by discharging the secondary batteries at 2.5C pulse in SOC50 to measure the resistance.

For the evaluation of the resistance increase rate measurement, data at 150 cycles was each calculated, and the results are shown in Table 2 below.

**Experimental Example 3: Rapid Charging Evaluation**

The charging times were measured by charging the secondary batteries including the negative electrodes prepared in the Examples and Comparative Examples at 6C in SOC20 in CC-CV mode (4.2V, 5% cut-off) within 35°C with an electrochemical charging and discharging device. The results are shown in Table 2 below.

**Experimental Example 4: Electrode Curl Measurement**

As shown in FIG. 5, the degree of bending was measured by placing the uncoated part of the coated electrode to face upward and measuring the height of the central portion. In other words, when drying the binder, the coated part becomes concave due to an action of tensile stress, and thus, curl occurs. In this experimental example, the degree of curl was measured, and the results are shown in Table 2 below.

[Table 2]

| | Example 1 | Example 2 | Example 3 | Example 4 | Example 5 | Example 6 | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|---|---|---|
| Evaluation of life Characteristics at SOH80% (cycle) (4.2-3.0V) | 195 | 191 | 194 | 193 | 189 | 195 | 178 | 176 | 147 | 185 | 158 | 164 | 186 |
| Resistance increase rate (%, @150 cycle, discharging ) | 38% | 41% | 39% | 42% | 43% | 45% | 54% | 53% | 76% | 47% | 68% | 64% | 47% |
| Charging time (6C @35°C) | 8 minutes 20 seconds | - | - | - | 8 minutes 30 seconds | 8 minutes 24 seconds | - | - | - | 8 minutes 21 seconds | 8 minutes 28 seconds | - | - |
| Curl evaluation (mm) | 13 | 11 | - | 15 | - | 10 | - | - | - | 25 | 9 | - | - |

As can be seen in Table 2, in Examples 1 to 6 according to the present disclosure, the first negative electrode binder includes the above-described PAM or PAA-based polymer aqueous binder and the rubber-based binder, and particularly satisfies the range of Equation 1 above. In other words, it could be confirmed that a proportion of the aqueous binder for improving the dispersibility of the first negative electrode active material layer composition can be reduced, and the rubber-based binder can be further included, whereby it is possible to solve the problem of process stability in which shrinkage due to heat intensifies, thereby enhancing the life characteristics. In addition, it could be confirmed that as the first negative electrode binder having the specific composition as described above is used, the problem of the volume expansion is improved, the amount of conductive material can be reduced, and the electrode can be formed thinner, leading to maximization in capacity characteristics and improvement in non-uniformity in the depth direction.

In addition, Examples 1 to 6 correspond to the cases in which the second negative electrode active material layer was introduced, and it could be confirmed that life and resistance performance were improved. Additionally, it could be confirmed that the rapid charging performance was improved in Examples 1 and 6 in which the proportion of the second negative electrode active material in the second negative electrode active material layer was increased.

Additionally, it was found by comparing Examples 1 and 2 that the higher the proportion of the rubber-based binder, the less the curling of the electrode occurred, which was advantageous for process stability.

Additionally, in comparison of Examples 1 and 5, when the Si content in the first negative electrode active material layer was high, the first negative electrode active material layer could be formed thinner. In this case, as can be seen from the rapid charging performance, it could be confirmed that Example 1 was superior to Example 5 in terms of the rapid charging performance. This is a result of the binder of the first negative electrode active material layer satisfying the combination according to the present disclosure, allowing the first negative electrode active material layer to be formed thin.

Comparative Examples 1 to 3 are comparative examples in which the negative electrode active material layer has a single layer. Specifically, Comparative Examples 1 to 3 correspond to a case where only the first negative electrode active material layer according to aspects of the present disclosure is provided as a single layer, a case where only the rubber-based binder is provided as a single layer, and a case where only the aqueous binder is provided as a single layer. In these cases, it could be confirmed that the life characteristics were deteriorated, and the resistance increase rate was increased compared to the Examples. This corresponds to the result of the irregular reaction on the surface of the silicon-based negative electrode.

Comparative Examples 4 to 7 have a double-layer structure in which the negative electrode active material layer has two layers, as in the Examples. However, Comparative Example 4 corresponds to a case where the first negative electrode active material layer has only the aqueous binder, Comparative Example 5 corresponds to a case where the first negative electrode active material layer has only the rubber-based binder, Comparative Example 6 corresponds to a case that exceeds the range of Equation 1, and Comparative Example 7 corresponds to a case that falls below the range of Equation 1.

In the end, in the cases of Comparative Examples 4 to 7 where the first negative electrode active material layer according to aspects of the present disclosure did not satisfy the range of Equation 1, it could be confirmed that when the ratio according to aspects of the present disclosure was not satisfied, the life characteristics were deteriorated compared to Examples 1 to 6 and that the resistance increase rate was also high.

Additionally, as can be seen in Tables 1 and 2 above, it could be confirmed that the thickness of the first negative electrode active material layer was determined by the Si content included. Comparative Examples 1 to 3 correspond to a single-layer structure without a second negative electrode active material layer. SiO has the smaller capacity compared to Si. Therefore, in order to produce the same capacity, the entire thickness of the negative electrode active material layer may be formed smaller than in the Examples of the present disclosure. Accordingly, the rapid charging performance may be slightly better than that of the Examples. However, as can be seen in Table 2, it could be confirmed that the life characteristics were very deteriorated compared to the Examples and the resistance increase rates were also high.

For reference, in the cases of Comparative Examples 4 and 5, the silicon content is the same as Example 1 of the present disclosure and the thickness range is the same. In this case, as can be seen in Table 2, the rapid charging performance was evaluated to similar to those of the Examples. However, the first negative electrode active material layer according to aspects of the present disclosure did not satisfy the range of Equation 1, and it could be confirmed that when the ratio according to aspects of the present disclosure was not satisfied, the life characteristics were very deteriorated, and that the resistance increase rates were also high.

## Claims

1.  A negative electrode for a lithium secondary battery, the negative electrode comprising:

    a negative electrode current collector layer;

a first negative electrode active material layer provided on one surface or both surfaces of the negative electrode current collector layer; and

a second negative electrode active material layer provided on a surface of the first negative electrode active material layer opposite to a surface of the first negative electrode active material layer facing the negative electrode current collector layer,

wherein the first negative electrode active material layer comprises a first negative electrode active material layer composition comprising a first negative electrode active material, and the second negative electrode active material layer comprises a second negative electrode active material layer composition comprising a second negative electrode active material,

wherein the first negative electrode active material comprises one or more selected from the group consisting of SiOx (x=0) and SiOx (0<x<2), and comprises the SiOx (x=0) in an amount of 95 parts by weight or more on the basis of 100 parts by weight of the first negative electrode active material,

wherein the second negative electrode active material comprises a mixture of one or more selected from the group consisting of a carbon-based active material, a silicon-based active material, a metal-based active material capable of forming an alloy with lithium, and a lithium-containing nitride,

wherein the first negative electrode active material layer composition comprises a first negative electrode binder, and

wherein the first negative electrode binder comprises a polyacrylamide (PAM) or polyacrylic acid (PAA)-based polymer aqueous binder and a rubber-based binder, and satisfies Equation 1 below:

$$[Equation\ 1]$$

$$1 \le X/Y < 4$$

in Equation 1,

X is parts by weight of the rubber-based binder based on 100 parts by weight of the first negative electrode binder, and

Y is parts by weight of the aqueous binder based on 100 parts by weight of the first negative electrode binder.

2. The negative electrode for the lithium secondary battery of claim 1, wherein the silicon-based active material comprises one or more selected from the group consisting of SiOx (0<x<2), SiC, and a Si alloy.

3. The negative electrode for the lithium secondary battery of claim 1, wherein the silicon-based active material comprises SiOx (0<x<2) or SiC.

4. The negative electrode for the lithium secondary battery of claim 1, wherein the silicon-based active material is included in an amount of 60 parts by weight or more based on 100 parts by weight of the second negative electrode active material.

5. The negative electrode for the lithium secondary battery of claim 1, wherein the first negative electrode active material is included in an amount of 60 parts by weight or more based on 100 parts by weight of the first negative electrode active material layer composition.

6. The negative electrode for the lithium secondary battery of claim 1, wherein a thickness of the first negative electrode active material layer is 10 um or greater and 200 um or less, and wherein a thickness of the second negative electrode active material layer is 10 um or greater and 100 um or less.

7. The negative electrode for the lithium secondary battery of claim 1, wherein the X is 50 parts by weight or more and 95 parts by weight or less, and wherein the Y is 5 parts by weight or more and 50 parts by weight or less.

8. The negative electrode for the lithium secondary battery of claim 1, wherein the first negative electrode active material layer composition further comprises one or more selected from the group consisting of a first negative electrode conductive material and a first negative electrode binder.

9. The negative electrode for the lithium secondary battery of claim 1, wherein the first negative electrode active material layer is formed on an entire surface of the negative electrode current collector layer, and
wherein the second negative electrode active material layer is formed on an entire surface of the first negative electrode active material layer.

10. A method for manufacturing a negative electrode for a lithium secondary battery, the method comprising:

preparing a negative electrode current collector layer;
forming a first negative electrode active material layer by applying a first negative electrode active material layer composition comprising a first negative electrode active material to one surface or both surfaces of the negative electrode current collector layer; and
forming a second negative electrode active material layer by applying a second negative electrode active material layer composition comprising a second negative electrode active material to a surface of the first negative electrode active material layer opposite to a surface of the first negative electrode active material layer facing the negative electrode current collector layer,
wherein the first negative electrode active material comprises one or more selected from the group consisting of SiOx (x=0) and SiOx (0<x<2), and comprises the SiOx (x=0) in an amount of 95 parts by weight or more on the basis of 100 parts by weight of the first negative electrode active material,
wherein the second negative electrode active material comprises a mixture of one or more selected from the group consisting of a carbon-based active material, a silicon-based active material, a metal-based active material capable of forming an alloy with lithium, and a lithium-containing nitride,
wherein the first negative electrode active material layer composition comprises a first negative electrode binder, and
wherein the first negative electrode binder comprises a PAM or PAA-based polymer aqueous binder and a rubber-based binder, and satisfies Equation 1 below:

$$[Equation\ 1]$$

$$1 \leq X/Y < 4$$

in Equation 1,

X is parts by weight of the rubber-based binder on based on 100 parts by weight of the first negative electrode binder, and
Y is parts by weight of the aqueous binder based on 100 parts by weight of the first negative electrode binder.

11. The method of claim 10, wherein the first negative electrode active material layer is formed on an entire surface of the negative electrode current collector layer, and
wherein the second negative electrode active material layer is formed on an entire surface of the first negative electrode active material layer.

12. The method of claim 10, wherein the forming the second negative electrode active material layer on the first negative electrode active material layer comprises a wet on dry process, and
wherein the wet on dry process comprises:

applying the first negative electrode active material layer composition;
forming the first negative electrode active material layer by drying partially or completely the applied first negative electrode active material layer composition; and
applying the second negative electrode active material layer composition to the first negative electrode active material layer.

13. The method of claim 10, wherein the forming the second negative electrode active material layer on the first negative electrode active material layer comprises a wet on wet process, and
wherein the wet on wet process comprises:

applying the first negative electrode active material layer composition; and
applying the second negative electrode active material layer composition to the first negative electrode active material layer composition in an undried state of the first negative electrode active material layer composition.

14. A lithium secondary battery comprising:

a positive electrode;
the negative electrode for a lithium secondary battery of any one of claims 1 to 9;
a separator provided between the positive electrode and the negative electrode; and
an electrolyte.

[Figure 1]

[Figure 2]

[Figure 3]

```
┌─────────────────────────────────────────────────────────┐
│ Prepare first anode slurry mixture (active material/      │
│ conductive agent/binder/solvent)                          │
└─────────────────────────────────────────────────────────┘
                            ↓
┌─────────────────────────────────────────────────────────┐
│ Apply first anode slurry mixture to collector             │
└─────────────────────────────────────────────────────────┘
                            ↓
┌─────────────────────────────────────────────────────────┐
│ Drying the first anode slurry mixture to form the first   │
│ layer                                                     │
└─────────────────────────────────────────────────────────┘
                            ↓
┌─────────────────────────────────────────────────────────┐
│ Prepare second anode slurry mixture                       │
└─────────────────────────────────────────────────────────┘
                            ↓
┌─────────────────────────────────────────────────────────┐
│ Apply the second anode slurry mixture on the first layer  │
└─────────────────────────────────────────────────────────┘
                            ↓
┌─────────────────────────────────────────────────────────┐
│ Drying the second anode slurry mixture to form the second │
│ layer                                                     │
└─────────────────────────────────────────────────────────┘
                            ↓
┌─────────────────────────────────────────────────────────┐
│ Roll and press the negative electrode                     │
└─────────────────────────────────────────────────────────┘
                            ↓
┌─────────────────────────────────────────────────────────┐
│ Slitting the negative electrode 2 times using single      │
│ coating die                                               │
└─────────────────────────────────────────────────────────┘
```

[Figure 4]

```
┌─────────────────────────────────────────────────────────────────┐
│  Prepare first anode slurry mixture (active material/conductive    │
│                    agent/binder/solvent)                           │
└─────────────────────────────────────────────────────────────────┘
                              ⬇
┌─────────────────────────────────────────────────────────────────┐
│              Prepare second anode slurry mixture                   │
└─────────────────────────────────────────────────────────────────┘
                              ⬇
┌─────────────────────────────────────────────────────────────────┐
│      Apply first anode slurry mixture to collector as the first layer │
└─────────────────────────────────────────────────────────────────┘
                              ⬇
┌─────────────────────────────────────────────────────────────────┐
│         Apply the second anode slurry mixture on the first layer   │
└─────────────────────────────────────────────────────────────────┘
                              ⬇
┌─────────────────────────────────────────────────────────────────┐
│    Drying the second anode slurry mixture to form the second layer │
└─────────────────────────────────────────────────────────────────┘
                              ⬇
┌─────────────────────────────────────────────────────────────────┐
│              Roll and press the negative electrode                 │
└─────────────────────────────────────────────────────────────────┘
                              ⬇
┌─────────────────────────────────────────────────────────────────┐
│   Slitting the negative electrode 2 times using single coating die │
└─────────────────────────────────────────────────────────────────┘
```

[Figure 5]

TENSILE STRESS

40
30

W

40
30

| INTERNATIONAL SEARCH REPORT | International application No. |
|---|---|
| | **PCT/KR2023/016334** |

**A. CLASSIFICATION OF SUBJECT MATTER**

**H01M 4/38**(2006.01)i; **H01M 4/48**(2010.01)i; **H01M 4/62**(2006.01)i; **H01M 4/134**(2010.01)i; **H01M 4/1395**(2010.01)i; **H01M 4/04**(2006.01)i; **H01M 10/0525**(2010.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/38(2006.01); H01M 10/052(2010.01); H01M 2/10(2006.01); H01M 2/34(2006.01); H01M 4/13(2010.01); H01M 4/58(2010.01); H01M 4/62(2006.01); H01M 4/66(2006.01); H01M 50/411(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지(lithium secondary battery), 음극(anode), 바인더(binder), 실리콘(silicon), 탄소(carbon), 다층(multi-layer)

**C. DOCUMENTS CONSIDERED TO BE RELEVANT**

| Category* | Citation of document, with indication, where appropriate, of the relevant passages | Relevant to claim No. |
|---|---|---|
| Y | JP 6047990 B2 (DAINIPPON PRINTING CO., LTD.) 21 December 2016 (2016-12-21)<br>See claims 1-3; and paragraphs [0010], [0027], [0031], [0032], [0040], [0050], [0064]-[0067] and [0072]. | 1-14 |
| Y | KR 10-2014-0147052 A (LG CHEM, LTD.) 29 December 2014 (2014-12-29)<br>See paragraphs [0045]-[0048] and [0083]. | 1-14 |
| Y | KR 10-2022-0048461 A (LG ENERGY SOLUTION, LTD.) 19 April 2022 (2022-04-19)<br>See paragraph [0070]. | 13 |
| A | KR 10-2019-0038549 A (HYDRO-QUEBEC et al.) 08 April 2019 (2019-04-08)<br>See entire document. | 1-14 |
| A | JP 2015-069711 A (TOPPAN PRINTING CO., LTD.) 13 April 2015 (2015-04-13)<br>See entire document. | 1-14 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **05 February 2024** | **05 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

<table>
<tr><td colspan="2" align="center">INTERNATIONAL SEARCH REPORT<br>Information on patent family members</td><td colspan="2">International application No.<br><br>**PCT/KR2023/016334**</td></tr>
</table>

| Patent document cited in search report | | | Publication date (day/month/year) | Patent family member(s) | | | Publication date (day/month/year) |
|---|---|---|---|---|---|---|---|
| JP | 6047990 | B2 | 21 December 2016 | JP | 2014-035885 | A | 24 February 2014 |
| KR | 10-2014-0147052 | A | 29 December 2014 | CN | 105308780 | A | 03 February 2016 |
| | | | | CN | 105308780 | B | 11 September 2018 |
| | | | | US | 2015-0125747 | A1 | 07 May 2015 |
| | | | | US | 9515321 | B2 | 06 December 2016 |
| | | | | WO | 2014-204214 | A1 | 24 December 2014 |
| KR | 10-2022-0048461 | A | 19 April 2022 | CN | 115769398 | A | 07 March 2023 |
| | | | | EP | 4163993 | A1 | 12 April 2023 |
| | | | | JP | 2023-528519 | A | 04 July 2023 |
| | | | | US | 2023-0261191 | A1 | 17 August 2023 |
| | | | | WO | 2022-080836 | A1 | 21 April 2022 |
| KR | 10-2019-0038549 | A | 08 April 2019 | CA | 3029067 | A1 | 04 January 2018 |
| | | | | CN | 109792051 | A | 21 May 2019 |
| | | | | CN | 109792051 | B | 04 August 2023 |
| | | | | CN | 116960344 | A | 27 October 2023 |
| | | | | EP | 3479428 | A1 | 08 May 2019 |
| | | | | EP | 3479428 | A4 | 29 April 2020 |
| | | | | JP | 2019-519901 | A | 11 July 2019 |
| | | | | JP | 2022-066309 | A | 28 April 2022 |
| | | | | JP | 7307543 | B2 | 12 July 2023 |
| | | | | KR | 10-2465274 | B1 | 10 November 2022 |
| | | | | US | 11228038 | B2 | 18 January 2022 |
| | | | | US | 2019-0157679 | A1 | 23 May 2019 |
| | | | | WO | 2018-000101 | A1 | 04 January 2018 |
| JP | 2015-069711 | A | 13 April 2015 | CN | 105580164 | A | 11 May 2016 |
| | | | | JP | 2015-069712 | A | 13 April 2015 |
| | | | | JP | 2015-179575 | A | 08 October 2015 |
| | | | | KR | 10-2016-0062025 | A | 01 June 2016 |
| | | | | TW | 201530868 | A | 01 August 2015 |
| | | | | US | 2016-0204428 | A1 | 14 July 2016 |
| | | | | WO | 2015-045385 | A1 | 02 April 2015 |

Form PCT/ISA/210 (patent family annex) (July 2022)

**REFERENCES CITED IN THE DESCRIPTION**

**Patent documents cited in the description**

- KR 1020220136718

- JP 2009080971 A